(19) Europäisches Patentamt
European Patent Office
Office européen des brevets

(11) **EP 2 739 461 B1**

(12) **EUROPEAN PATENT SPECIFICATION**

(45) Date of publication and mention
of the grant of the patent:
**10.04.2019 Bulletin 2019/15**

(51) Int Cl.:
**B29C 70/60** *(2006.01)*  **C08K 3/00** *(2018.01)*
**B29C 70/00** *(2006.01)*

(21) Application number: **12742913.2**

(22) Date of filing: **02.08.2012**

(86) International application number:
**PCT/EP2012/065120**

(87) International publication number:
**WO 2013/017651 (07.02.2013 Gazette 2013/06)**

(54) **SELF-CLEANING COMPOSITE MATERIAL, IN PARTICULAR A COMPOSITE MATERIAL FOR PRODUCTION OF MOLDED ITEMS FOR KITCHEN AND BATHROOM INTERIOR DECORATION**

SELBSTREINIGENDES VERBUNDMATERIAL, INSBESONDERE EIN VERBUNDMATERIAL FÜR DIE HERSTELLUNG GEGOSSENER GEGENSTÄNDE FÜR DIE INNENEINRICHTUNG VON KÜCHEN UND BADEZIMMERN

MATÉRIAU COMPOSITE AUTO-NETTOYANT, EN PARTICULIER UN MATÉRIAU COMPOSITE POUR LA PRODUCTION D' ARTICLES MOULÉS POUR L' AMÉNAGEMENT INTÉRIEUR DE CUISINE ET SALLE DE BAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2011 IT MC20110042**

(43) Date of publication of application:
**11.06.2014 Bulletin 2014/24**

(73) Proprietor: **DELTA s.r.l.**
**62010 Montecassiano (IT)**

(72) Inventors:
• **BUGIOLACCHIO, Antonio**
**I-62019 Recanati (MC) (IT)**
• **MARCANTONI, Enrico**
**I-62022 Castelraimondo (MC) (IT)**
• **PIANESI, Maria Savina**
**I-62100 Macerata (IT)**
• **ROSSINI, Samuele**
**I-60022 Castelfidardo (AN) (IT)**

(74) Representative: **Cutropia, Gianluigi**
**Ing. Claudio Baldi s.r.l.**
**Viale Cavallotti, 13**
**60035 Jesi (AN) (IT)**

(56) References cited:
**EP-A1- 1 114 716**     **WO-A1-02/38682**
**US-A1- 2003 027 884**

**Description**

The present patent application for industrial invention relates to a self-cleaning composite material, in particular a composite material for production of molded items for kitchen and bathroom interior decoration, such as for example sinks, tops, washbasins and the like.

Patent EP1114716 discloses a composite material used to produce molded items for kitchen and bathroom interior decoration. Such a composite material comprises an organic resin that is mixed to quartz-based mineral extenders. The organic resin comprises a silane used as bonding agent of the quartz-based mineral extenders. However, such a material does not have intrinsic self-cleaning characteristics.

As it is known, some domestic surfaces, such as sinks, tops, wash-basins, bathtubs, shower trays and similar items, are in daily contact with organic contaminants of food and biological origin. Dirt, such as stains and grease, remains firmly anchored to the quartz-based polymeric matrix surfaces and cleaning is rather complex, requiring the use of many soaps and detergents.

Patent WO 02/38682 discloses a photocatalytic paint used as coating for a product and does not describe a finished solid product that is completely photocatalytic. Said photocatalytic paint is an aqueous dispersion that comprises titanium dioxide, preferably in anatase form, with grain-size lower than 100 nm, in quantity from 0.001 to 10%. Said dispersion may comprise methacrylic monomers and polymers, such as MMA and PMMA and methacrylic acid. Such an aqueous dispersion is a paint that is used as coating for a product, if compatible, in order to make it self-cleaning. Such paint is not suitable for washbasins because, when the thin layer of paint is scratched, the washbasin is no longer self-cleaning.

The application of the aqueous dispersion on a substrate to form the photoactive layer can be made, as coating, by means of spraying, sponge or cloth.

Moreover, the aqueous dispersion described in WO 02/38682 cannot be used with quartz extenders, such as the mixture described in EP1114716, because such dispersion is polymerized by trigger by means of peroxydic catalysts and hot process. The water contained in the photocatalytic aqueous dispersion described therein would not permit the formation of a bond with MMA and PMMA because it would inhibit radical polymerization. MMA has maximum water solubility at 3%. The paint layer described in patent WO 02/38682 is dried at ambient temperature or by means of heating at temperature lower than the degradation temperature of organic compounds.

Although WO 02/38682 describes an aqueous dispersion that contains MMA and the use of a silane as bonding agent, said document does not illustrate any experimental tests that demonstrate anchoring of silane to MMA. In fact, because of the presence of water, said type of anchoring is not efficacious.

The purpose of the present invention is to eliminate the drawbacks of the prior art by disclosing a composite material, in particular a composite material for the production of kitchen and bathroom furnishing items, of self-cleaning type.

Another purpose of the invention is to provide a self-cleaning composite material that is intrinsically photocatalytic, effective, efficacious, and at the same time ecofriendly and non-toxic for man.

These purposes are achieved according to the invention, with the characteristics claimed in the enclosed independent claims 1 and 9.

The material of the invention has a strong interaction with ambient and air. In fact, when in contact with the ambient, the composite material purifies air and reduces fine particles and atmospheric contamination. Numerous polluting substances are contained in modern ambient, such as cigarette smoke, frying odors, ammonia, nitrogen oxide, sulphur oxide, benzene, and carbon monoxide. These polluting substances are subject to anti-contamination reactions, where substances are decomposed in harmless substances, such as water and carbon dioxide.

The composite material will be added and chemically bound to the structure with an active principle such as fotocatalytic titanium dioxide.

The product of the invention is a photoactive dispersion in mass composed of an organic part, such as MMA and PMMA, cross-linkers and chemicals, and of an inorganic part, which is the predominant part, of mineral extenders. Said dispersion contains photocatalytic $TiO_2$ that is intimately bound by silane to the structure and makes the entire dispersion photocatalytic.

The product obtained through polymerization of said dispersion is a strongly-charged methacrylic composite material that is totally innovative, unprecedented on the market, with intrinsic photocatalytic characteristics. It is the first photocatalytic product in its entire thickness, in the mass, which differs from the paints that are applied on the surface. The photocatalytic property is not only on the surface of the product, but is a peculiarity of the material itself.

It must be considered that a finished product, such a sink, according to the invention is completely photoactive, meaning that the sink is photocatalytic in its entire structure and mass. So, the sink remains photocatalytic in its entire thickness for its entire life cycle. This is the result of the chemical bond that is formed between the photocatalytic titanium and the structure of the product itself.

Further characteristics of the invention will appear clearer from the detailed description below, which refers to merely illustrative, not limiting, embodiments, illustrated in the attached drawings, wherein:

Fig. 1 is a diagram showing the photocatalytic cycle of $TiO_2$, in particular the generation of the oxidizing pair $O_2^{\cdot-}/\cdot OH$;

Fig. 2 shows the anchoring of P-25 $TiO_2$ to the structure of the polymethylmethacrylate polymer;

Fig. 3 is a graph showing the FT-IR spectrum of the polymethylmethacrylate (PMMA);

Fig. 4 is a graph showing the FT-IR spectrum of the polymeric material added with 1% of $TiO_2$;

Fig. 5 is a graph showing the trend of the contact angle of $H_2O$ positioned on the surface of the PMMA added with 0.05% of $TiO_2$ and 0.0075% of $SiO_2$; measures were taken after exposure to a Xenon lamp (Solar Box 1500 e, 280-400 nm, 25 mW/cm$^2$, Temp. = 45°C) at different time intervals for maximum 60 minutes;

Fig. 6 is a graph showing the trend of the contact angle of $CH_2I_2$ after exposure to a Xenon lamp (Solar Box 1500 e, 280-400 nm, outdoor filter, 25 mW/cm$^2$, Temp. = 45°C) for 15 minutes; a drop of $CH_2I_2$ was positioned on a surface of PMMA added with 0.05% of $TiO_2$ and 0.0075% of $SiO_2$;

Figs. 7A and 7B show the image of a drop of $H_2O$ positioned on the surface of a polymeric material added with 0.05% of $TiO_2$ and 0.0075% of $SiO_2$, respectively before and after exposing the material to a Xenon lamp for 60 minutes

Figs. 8A and 8B show an image of a drop of $CH_2I_2$ positioned on the surface of a polymeric material added with 0.05% of $TiO_2$ and 0.0075% of $SiO_2$, respectively before and after exposing the material to a Xenon lamp for 15 minutes;

Figs. 9A and 9B respectively show the wettability of a material without and a material with photocatalytic $TiO_2$ using methylene blue as coloring agent;

Fig. 10 is a graph showing the trend of the glass transition temperature (tg) of polymeric materials in accordance with the contents of $TiO_2$ (0.05, 0.1, 0.5, 1, 2.25, 4.5%);

Fig. 11 is a diagrammatic view of the Cie-Lab coordinates used to calculate the ∆E with regard to decoloration of pigments (eosin and methylene blue) by $TiO_2$ after exposure to a Xenon lamp;

Fig. 12A is a graph showing the trend of ∆E of eosin Y coloration, measured at colorimeter Color I7 X-Rite, after exposure to a Xenon lamp (Solar Box 1500 e, 280-400 nm, outdoor filter, Temp. = 45 °C);

Fig. 12B shows the molecular structure of eosin Y;

Fig. 13A is a graph showing the trend of ∆E of methylene blue coloration measured with colorimeter Color I7 X-Rite after exposure to a Xenon lamp (Solar Box 1500 e, 280-400 nm, outdoor filter, Temp. = 45 °C);

Fig. 13B shows the molecular structure of methylene blue;

Fig. 14 is a graph showing the trend of eosin Y decoloration according to time after exposure to a Xenon lamp (Solar Box 1500 e, 280-400 nm, outdoor filter, Temp. = 45 °C);

Fig. 15 is a graph showing the trend of methylene blue decoloration according to time after exposure to Xenon lamp (Solar Box 1500 e, 280-400 nm, 45 mW/cm2, Temp. = 45 °C);

Fig. 16 shows the decoloration of eosin Y positioned on the surface of a PMMA-based material added with 4.5% of $TiO_2$ before (a) and after 270 minutes (b) of exposure to a Xenon lamp;

Fig. 17 shows the decoloration of methylene blue positioned on the surface of a PMMA-based material added with 4.5% of $TiO_2$ before (a) and after 270 minutes (b) of exposure to a Xenon lamp;

Fig. 18 is a graph showing the degradation of oleic acid by photocatalytic $TiO_2$ after exposure to a Xenon lamp for 60 minutes;

Fig. 19A is a graph showing the degradation of methyl red by photocatalytic $TiO_2$ dispersed at 0.5 and 1% in PMMA;

Fig. 19B shows the molecular structure of methyl red;

Fig. 20 shows six test-tubes illustrating the decoloration of a methyl red solution at 8.82 ppm by a sample (2 cm x 2 cm) with 1% of $TiO_2$;

Fig. 21 is a graph showing the trend of absorbance of a methyl red solution at 8.82 ppm in presence of $TiO_2$ dispersed at 1% in PMMA;

Fig. 22 is a graph showing the trend of decoloration of eosin Y and methylene blue positioned on a surface of DQ Avena MSV added with 0.3% of $TiO_2$;

Fig. 23 is a graph showing the viscosity variation in time of two dispersions containing silane and Ti02, respectively in (1:1) and (2:1) weight ratios, illustrating viscosity reduction because of the formation of the Titanium and Silane chemical bond.

Figs. 24 and 25 are two charts respectively showing the reflectance percentage and reflectance variation/time variation ratio measured in a dispersion containing silane and TiO2 over time, which illustrate the reflectance variation because of formation of the Titanium and Silane chemical bond and

Fig. 26 is a graph showing the glass transition temperature upon temperature change of a finished product containing silane and $TiO_2$ and a finished product without $TiO_2$, confirming the transition temperature increment of the composite material because of the formation of the Titanium and Silane chemical bond.

Hereinafter, percentages are considered as percentages in weight with respect to the final product, unless the percentage ratio is specified.

The self-cleaning material of the invention comprises:

- 65-80% in weight of quartz-based mineral extenders;
- 2-15% in weight of fine particles of silicate family, having dimensions lower than 0.1 mm;
- 5-20% of glass microspheres, with grain-size lower than 212 micron;
- 10-25% of methacrylic syrup composed of one monomer and one polymer;
- photocatalytic titanium dioxide ($TiO_2$) dispersed in methacrylic syrup in weight percentage of 0.05-5% with respect to the weight of methacrylic syrup;
- coupling anchoring agent between photocatalytic $TiO_2$ and methacrylic syrup;
- cross-linking monomers to obtain reticulation of methacrylic syrup.

The fine particles of the silicate family can be, for instance, wollastonite, calcium silicate, cristobalite.

The manufacturing process of the self-cleaning material provides for a first phase wherein the monomer and the polymer are mixed to obtain the methacrylic syrup.

Fundamental importance is given to the addition mode of the $TiO_2$ active principle and, most of all, to the exclusive anchoring process by means of covalent bond of the $TiO_2$ active principle to the composite structure by means of anchoring compatibilizing substance.

Advantageously, the compatibilizing substance is the silinizing anchoring agent that determines the formation of the covalent bond between the photocatalytic $TiO_2$ and the methacrylic syrup.

Silane is the artificer of a silanization reaction that produces a covalent bond between $TiO_2$ and substrate. Said bond ensures anchoring of $TiO_2$ to the structure by means of a strong irreversible bond.

After the formation of syrup, the anchoring compatibilizing substance is added and perfectly dispersed by agitation at 900 rpm for 10 minutes in the methacrylic syrup.

Successively, the photocatalytic $TiO_2$ is added to the methacrylic syrup in order to obtain the best dispersion possible. Such a formulation is held in dispersion with screw agitator at a speed of 900 rpm for 2.30 hours. Then speed is increased to 1800 rpm for 30 minutes, in such manner to guarantee a complete dispersion of the $TiO_2$ in the methacrylic syrup.

The time necessary for functionalization, viz. silanization of photocatalytic titanium, is approximately 3 hours. The rest of the components can be added after such a reaction time.

After anchoring $TiO_2$ to the siloxane function of silane, all the other components are added: quartz-based mineral extenders, silicates (wollastonite, cristobalite, silica, etc.), glass microspheres and cross-linkers.

Said methacrylic dispersion is homogeneously maintained in dispersion with a screw agitator at a speed of 900 rpm for 2.30 hours and 1800 rpm for 30 minutes.

The final dispersion is put in a mold and polymerization is carried out thermally at 65 °C; the material is heated starting from a gradually increasing temperature of 25-30°C with heating ramps up to 100°C and successive cooling for average time from 20 to 40 minutes according to the type of dispersion and to the thermostatization system of the mold.

Table 1 illustrates an example of a typical heating cycle.

Table 1

| TIME (min) | Temp. of visible part | Temp. of back part |
|---|---|---|
| 0 | 30 °C | 25 °C |
| 0-20 | 80 °C | 50 °C |
| 20-40 | 100 °C | 100°C |

The methacrylic resins functionalized with photocatalytic $TiO_2$ showed excellent results in terms of degradation of different organic molecules, like oleic acid and coloring agents, such as eosin Y, methylene blue, methyl red. It was possible to obtain a polymeric material with self-cleaning surface by means of dispersion in mass of the $TiO_2$ in presence of the siloxane 3-(trimethoxylsilyl) propyl methacrylate function.

The siloxane group allows for anchoring the $TiO_2$ to the structure of the polymeric material, acting at the same time as disgregating agent; in such a way, $TiO_2$ is completely dispersed in the material, both in surface and mass.

The silica particles with dimensions lower than 0.1 mm give suitable homogeneity to the composition of the dispersion and favor a homogeneous surface for molding.

Moreover, glass microspheres are introduced in the composition of the self-cleaning material because they increase concentration of the inorganic material, giving a soft-touch satin-finished surface.

Advantageously, $TiO_2$ is in anatase form and in powder, with nanometric grain-size lower than 300 nm.

Advantageously, the polymeric part composed of the methacrylatic syrup comprises a mixture of one monomer and one polymer. The monomer is a methylmethacrylate (MMA) and the polymer is a polymethylmethacrylate (PMMA) in weight percentage of approximately 18 - 25% with respect to MMA.

Preferably, the compatibilizing anchoring substance is silane, which is added to the mixture in a quantity equal to $TiO_2$; silane can be added up to a quantity double than the $TiO_2$ to guarantee a complete disintegration of the photocatalyst ($TiO_2$).

If the compatibilizing substance is trimethoxylsylyl, silanization catalysts, isopropylamine (IPA) and methacrylic acid (AMA), are used.

The peculiarity of the invention is represented by the dispersion of photocatalytic titanium dioxide ($TiO_2$) in the acrylic syrup that is polymerized. For this reason, the following studies and tests were mainly carried out on the cross-linked resin containing the photocatalytic $TiO_2$, avoiding the addition of inorganic material, such as quartz, silica and glass, which represent the most of the final product.

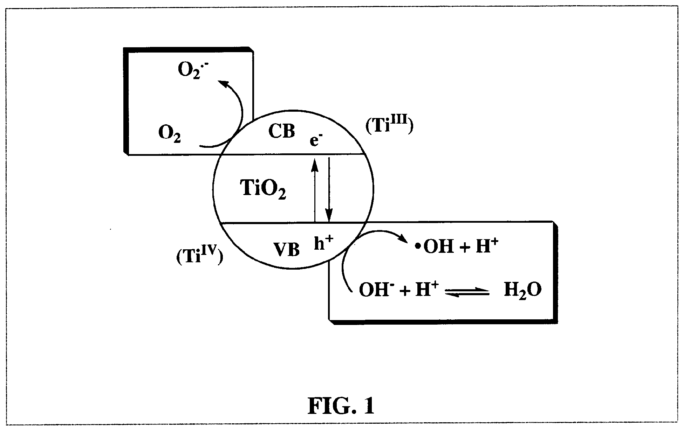

The photocatalytic degradation is exclusively carried out by the $TiO_2$ situated on the surface of the polymeric material. $TiO_2$ is a heterogeneous catalyst that, when activated by light, can generate a series of oxygenated active species, such as $O_2\cdot^-$, $\cdot OH$, and $H_2O_2$ able to degrade most organic substances. Therefore, $TiO_2$ only acts as catalyst and does not directly participate in the degradation process. The mechanisms by which $O_2$ and $H_2O$ are oxidized at $O_2\cdot^-$, $\cdot OH$, and $H_2O_2$ are rather articulated, and can be represented by the diagram of Fig. 1.

When a light beam with wavelength of approximately 385 nm hits the $TiO_2$ an electronic transfer is generated from the valence band (VB) to the conduction band (CB). Now the catalyst is activated and $TiO_2$ passes from the fundamental status to the excited status. Successively, from the interaction of $TiO_2$ in excited status with $H_2O$ and $O_2$ the oxidizing species are generated, as described in the diagram of Fig. 1.

In the conduction band where a singlet ($e^-$) is present, $O_2$ is reduced to superoxide radical $O_2\cdot^-$, whereas in the valence band hydroxyl anion $OH^-$ oxidizes to hydroxyl radical $\cdot OH$ by action of the electron hole ($h^+$). The $TiO_2$ photo-catalytic system is a cyclic system and is regenerated by simple interaction of $TiO_2$ with light.

During the study phases of the polymeric material with methacrylic syrup base added with $TiO_2$ further properties were observed, having an action synergic to the photocatalytic activity. These properties are listed hereinafter:

1. reduction of contact angle between surface and polar and apolar solvents (amphiphylic surface);
2. bactericidal action;
3. fungicidal action;
4. odor reduction;
5. reduction of contaminants in CO, NOx, SOx, VOC, etc. compounds;
6. improvement of mechanical properties of the polymer, such a glass transition temperature (tg).

In order for the polymeric maerial to exert the aforementioned functionalities, the preparation of said polymeric matrix must occur according to the following indications:

• $TiO_2$ shows photocatalytic activity only if present in allotropic anatase form and with nanometric dimensions For this reason all $TiO_2$ powders with grain-size higher than 300 nm without anatase crystalline structure are excluded and classified as pigments. $TiO_2$ (AEROXIDE® $TiO_2$ P-25, DEGUSSA) has these properties, is known for its excellent photocatalytic properties and finds application in the production of self-cleaning materials. The properties of $TiO_2$ (AER-OXIDE® $TiO_2$ P-25, DEGUSSA) are shown in Table 2:

Table 2

| | | |
|---|---|---|
| SPECIFIC SURFACE AREA (BET) | $m^2/g$ | $50 \pm 15$ |
| PRIMARY MEAN PARTICLE DIMENSIONS | Nm | 21 |
| ANATASE:RUTILE | | $75 \div 25$ |
| ANATASE MEAN DIMENSIONS (diameter) | Nm | 25 |
| RUTILE MEAN DIMENSIONS (diameter) | Nm | 85 |
| pH (4% dispersion in weight) | | 3.5-4.5 |
| $TiO_2$ | % in weight | $\geq 99.500$ |
| $Al_2O_3$ | % in weight | $\leq 0.300$ |
| $SiO_2$ | % in weight | $\leq 0.200$ |
| $Fe_2O_3$ | % in weight | $\leq 0.010$ |
| HCl | % in weight | $\leq 0.050$ |

(continued)

| RESIDUE AT SEEVE (45 μm) | % in weight | ≤ 0.050 |
| --- | --- | --- |

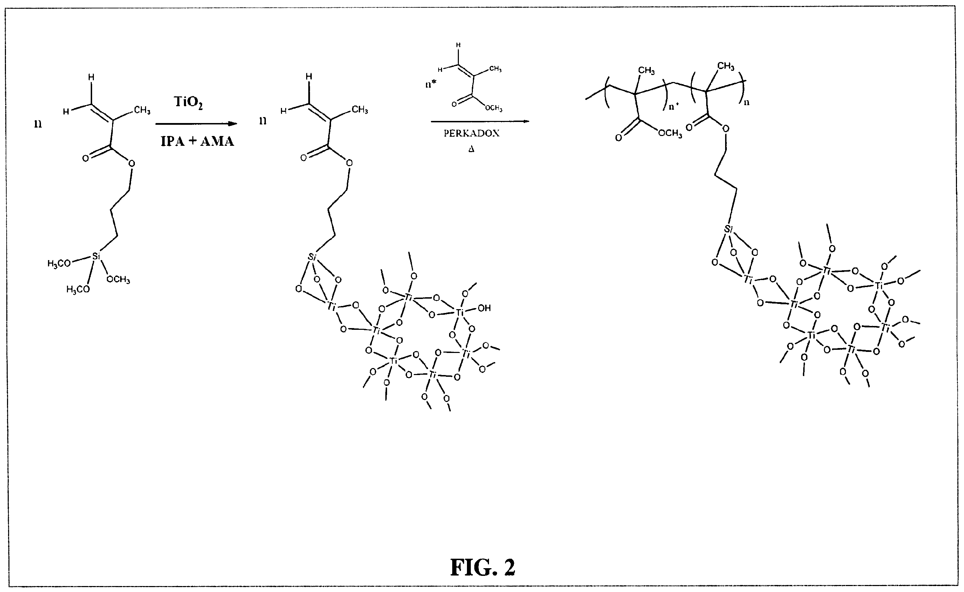

- TiO$_2$ is not simply dispersed in matrix, but is bound to the cross-linked structure of the polymer by means of anchoring to the siloxane function of methylmethacrylate, according to the reaction shown in Fig. 2.

The anchoring of TiO$_2$ to the polymer is assisted by methacrylic acid (AMA) and isopropylamine (IPA), which are two silanization catalysts. The anchoring of P-25 TiO$_2$ to the siloxane group-Si(OCH$_3$)$_3$ is confirmed by analytical tests carried out with FT-IR spectroscopy (Fourier Transform InfraRed spectroscopy) of the finished product.

The FT-IR spectrum shows a signal at 1063.0 + 1 cm$^{-1}$ relative to stretching -Ti-O and signals at 825.7 and 811.5 + 1 cm$^{-1}$ relative to stretching -Si-O bound to Ti.

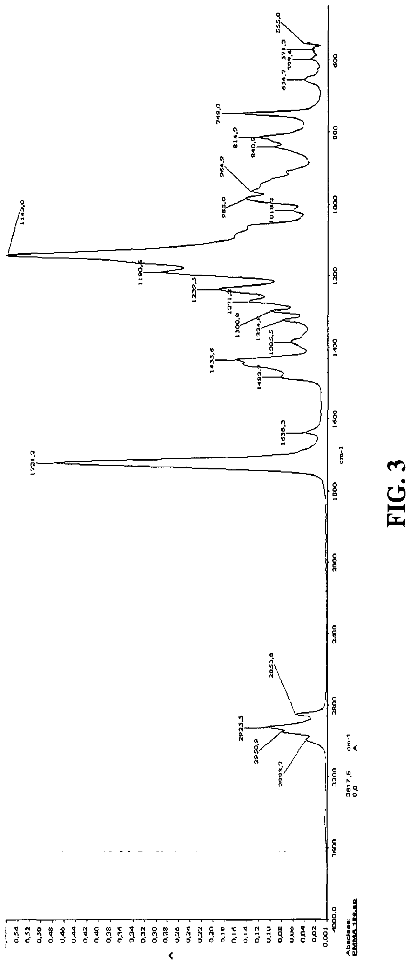

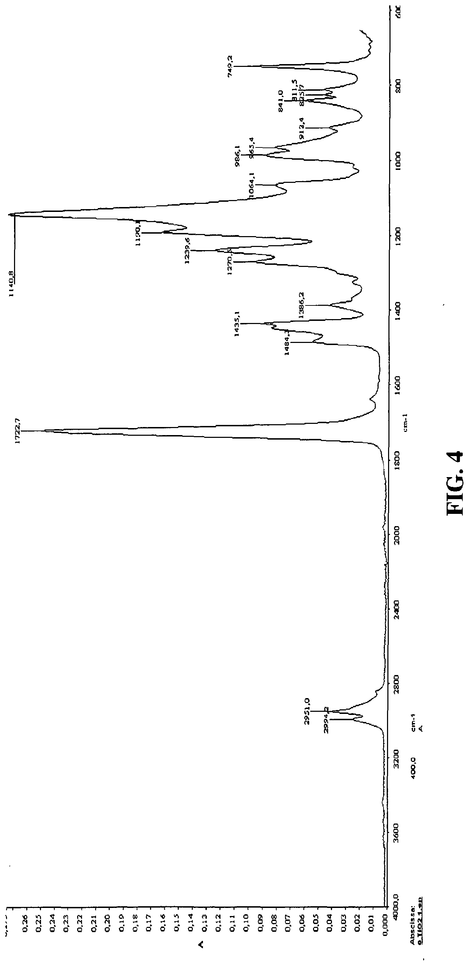

Another evidence of the anchoring of TiO$_2$ to the siloxane function -Si(OCH$_3$)$_3$ can be obtained by comparing the FT-IR spectra of the polymeric material with and without TiO$_2$, as shown in Figs. 3 and 4. Such a comparison shows that in the presence of TiO$_2$ a reduction of peak areas is observed at 2925.5 and 2853.8 cm$^{-1}$, which can be attributed to asymmetric and symmetric stretching of the group -OCH$_3$ bound to the siloxane function (-Si(OCH$_3$)$_3$). Another datum that confirms the anchoring of TiO$_2$ with the siloxane group can be observed in the fingerprints area, where the signal of the -Si-O bond at 814.9 cm$^{-1}$ is divided in two signals at 825.7 and 811.5 cm$^{-1}$ in the presence of TiO$_2$; signals at 840.5 and 814.9 cm$^{-1}$ can be attributed to the asymmetric and symmetric stretching of the Si-O bond, and signal splitting at 814.9 cm$^{-1}$ can be attributed to a reduction of the symmetry of the -Si(OCH$_3$) group $_3$ further to anchoring of TiO$_2$.

- The self-cleaning activity is guaranteed on the entire surface of the product because P-25 TiO$_2$ is perfectly dispersed in the polymeric matrix. The complete dispersion of P-25 TiO$_2$ is guaranteed by the presence of silane that carries out both the anchoring and the disgregating function of TiO$_2$.

- When added to methacrylic dispersions with mineral extenders such as silica, cristobalite, microsphere and quartz, P-25 TiO$_2$ allows for obtaining composite materials with self-cleaning properties. Said dispersions are used to produce sinks, work tops, bathtubs, shower trays for bathrooms and kitchens. The addition of pyrogenic silica (such as HDK H20-WACHER silica) SiO$_2$ improves the photocatalytic activity of TiO$_2$ because it stabilizes its anatase allotropic structure. This results in the increase of the photocatalytic activity of TiO$_2$ both in accordance to temperature and exposure time of the material to light. Therefore, the photocatalytic activity of TiO$_2$ is high also when the material is left in the dark, including for long time periods. Such a contribution of pyrogenic silica SiO$_2$ to the photocatalytic activity of P-25 TiO$_2$ is observed when silica is added in percentage from 10% to 20% in weight with respect to TiO$_2$.

- The photocatalytic activity of TiO$_2$ is not only carried out with the degradation of organic substances, but also through a variation of the contact angle between solvents and product surface, with consequent variation of the surface wettability. The variation of the contact angle is a consequence of P-25 TiO$_2$ that, when in excited status, changes its cross-linking structure. Such a transformation is transferred to the entire surface of the material. The variation of the contact angle of liquids is found in the entire surface of the material, confirming the high dispersion level of the photocatalyst on the entire surface area. The reaction of the titanium dioxide invested by light generates a hyperidrophilic surface with water, viz. a surface that is highly attractive for water. In these conditions a water surface veil is created on the entire surface. Dirt slips on said surface without coming in contact with the surface, thus expressing its self-cleaning properties.

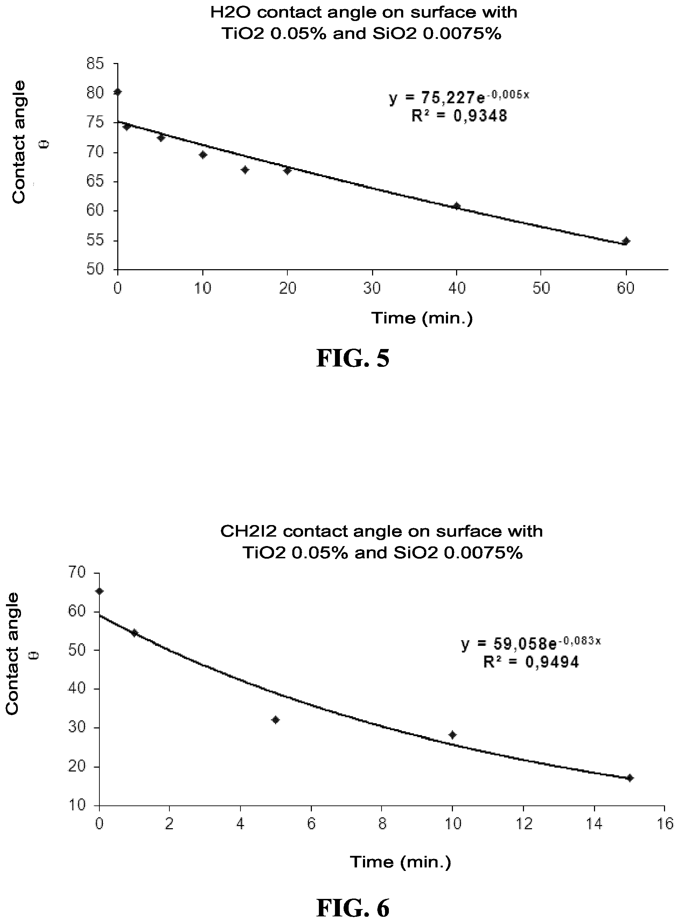

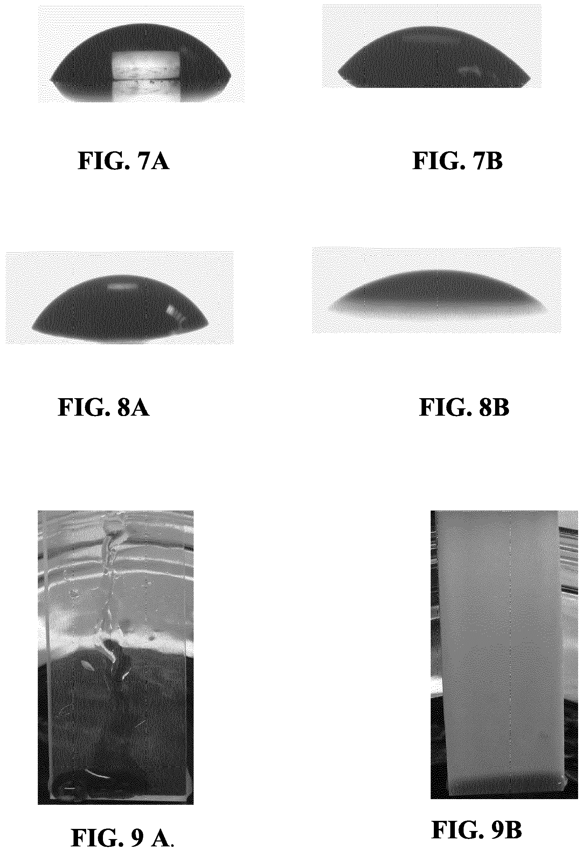

Figs. 7A and 7B show the image of a drop of H$_2$O positioned on the surface of a polymeric material added with 0.05% of TiO$_2$ and 0.0075% of SiO$_2$ respectively before and after exposure of the material to a Xenon lamp for 60 minutes. Fig. 5 shows the trend of the contact angle of H$_2$O positioned on the surface of a polymeric material added with 0.05% of TiO$_2$ and 0.0075% of SiO$_2$. As shown in the graph, the contact angle decreases with time.

Figs. 8A and 8B show an image of a drop of CH$_2$I$_2$ positioned on the surface of a polymeric material added with 0.05% of TiO$_2$ and 0.0075% of SiO$_2$ respectively before and after exposure of the material to a Xenon lamp for 15 minutes; Fig. 6 shows the trend of the contact angle of CH$_2$I$_2$ positioned on the surface on a polymeric material added with 0.05% of TiO$_2$ and 0.0075% of SiO$_2$. As shown in the graph, the contact angle decreases with time.

Fig. 9A shows the wettability of a material without photocatalytic TiO$_2$ and Fig. 9B shows the wettability of a material added with photocatalytic TiO$_2$.

The reduction of the contact angle by TiO$_2$ P-25 does not only change the surface wettability, but also the surface tension of the material with liquids. A reduction of the contact angle between surface and liquids corresponds to an increase of adherence between organic substances and TiO$_2$, favoring the photodegradation process, because in order for TiO$_2$ to degrade organic substances, the latter must be absorbed on the catalyst surface. Moreover, the reduction of the contact angle has a fundamental importance especially in the vertical walls of sinks, washbasins, bathtubs and shower trays, considerably affecting the cleanness of the material.

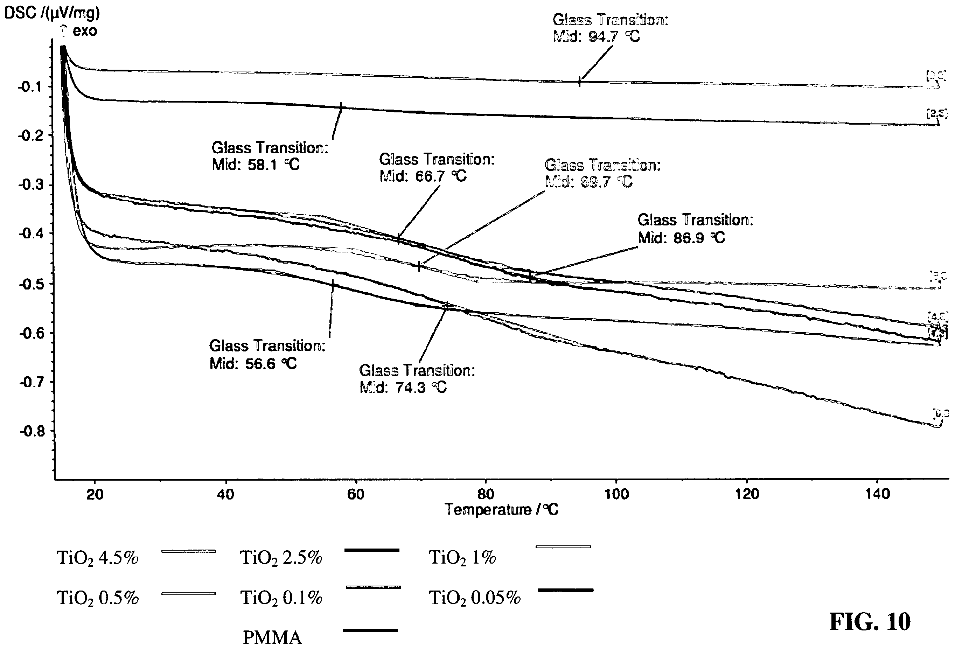

- The dispersion in mass of photocatalytic P-25 TiO$_2$ guarantees the self-cleaning activity of the product over time, including after the abrasion and wear of the material. When the surface undergoes abrasion or scratching, the product maintains its self-cleaning properties because P-25 TiO$_2$ is also found in the polymer. The P-25 TiO$_2$ that returns to the surface is activated by simple exposure to light.
- P-25 TiO$_2$ considerably improves the mechanical properties of the polymer. Upon increasing the contents of TiO$_2$ an increase of the glass transition temperature of (Tg) of the polymer is observed, thus also improving the mechanical performance of the finished product. The trend of the Tg is shown in Fig. 10.

In view of the foregoing observations, the preparation of the cross-linked acrylic resin with polymethylmethacrylate (PMMA) base functionalized with TiO$_2$ was obtained by mixing different organic components, which can be grouped as shown here below:

POLYMERIC PART:

- methylmethacrylate (MMA);
- polymethylmethacrylate (PMMA);

CROSS-LINKERS:

- diethyllenglycol dimethacrylate (EGDM);
- tetraethylenglycol dimethacrylate (TEGDM);
- trimethylopropane trimethacrylate (TMPTMA);

ANCHORING MOLECULE:

- 3-methacryloxypropyltrimethoxysilane (SILANE);

SILANIZATION CATALYSTS:

- isopropylamine (IPA);
- methacrylic acid (AMA);

RELEASING AGENTS:

- stearic acid;
- Zn-stearate;

Following are some examples of samples used for tests. The compositions of the samples are characterized by the same contents of cross-linkers and only differ in the contents of silane and TiO$_2$. Samples contain 0.05; 0.1; 0.5, 1; 2.25 and 4.5% of TiO$_2$, respectively.

**EXAMPLE 1** (PMMA without TiO$_2$)

The following components were mixed with a screw agitator (900-1800 rpm) in a 1000 cc container made of high-density polyethylene:

- 150.92 grams of high-purity methylmethacrylate;
- 33.14 grams of methymethacrylate polymer;

The mixture was agitated until complete dissolution of the polymethylmethacrylate (PMMA) polymer.

Then, the following components were added:

- 9 grams of silane DYNASYLAN MEMO 3-(trimethoxysilil) propyl methacrylate;
- 1.50, 1.00, 4.00 grams of cross-linking agents, respectively EGDM - TEGDM - TMPTM;
- 0.30 g of stearate zinc.

Variable quantities of methacrylic acid and isopropylamine were used as silanization catalysts, around 0.07 grams for each component.

Preparation occurs by mixing the aforementioned components in the following order; first, methylmethacrylate is mixed with polymethylmethacrylate (PMMA), followed by addition of DYNASYLAN MEMO (3-(trimethoxylsilil)propyl methacrylate) and relevant silanization catalysts, viz. methacrylic acid (AMA) and isopropylamine (IPA). Then, cross-linking agents (EGDM, TEGDM, TMPTM) and Zn-stearate are added and the dispersion is left in agitation for at least 2.30 hours. Successively, 0.5% of Perkadox polymerization catalyst is added, 0.15 % of stearic acid is added as releasing agent and the solution is agitated at 1800 rpm for 30 minutes. Then, the material is poured in the molds and polymerization is carried out in a water bath at 65 °C for 1 hour.

**EXAMPLE 2** (PMMA with 0.05% TiO$_2$)

The following components were mixed with a screw agitator (speed from 900 to 1800 rpm) in a 1000 cc container made of high-density polyethylene:

- 237.09 grams of high-purity methylmethacrylate;
- 52.05 grams of methymethacrylate polymer;

The mixture was agitated until complete dissolution of the polymethylmethacrylate (PMMA) polymer.

Then, the following components were added:

- 0.30 grams of silane DYNASYLAN MEMO 3-(trimethoxysilil) propyl methacrylate;
- 0.15 grams of DEGUSSA TiO$_2$ P-25;

Minimum mixing of 2.30 hours and addition of the following components:

- 2.25, 1.50, 6.00 grams of cross-linking agents, respectively EGDM - TEGDM - TMPTM;
- 0.45 g of stearate zinc.

Variable quantities of methacrylic acid (AMA) and isopropylamine (IPA) were used as silanization catalysts, respectively 0.10 and 0.11 grams.

Preparation occurs by mixing the aforementioned components in the following order; first, methylmethacrylate is mixed with the polymer (PMMA), followed by addition of DYNASYLAN MEMO (3-(trimethoxylsilil)propyl methacrylate) and P-25 TiO2, and relevant silanization catalysts, methacrylic acid (AMA) and isopropylamine (IPA).

Then, cross-linking agents EGDM, TEGDM, TMPTM, and Zn-stearate, are added. The dispersion is mixed with a screw agitator for 2.30 hours at a speed of 900 rpm; successively, speed is increased to 1800 rpm for 30 minutes and 0.50% of Perkadox catalyst and 0.30% of stearic acid as releasing agent are added. Polymerization of the material occurs thermally, as illustrated above.

**EXAMPLE 3** (PMMA with 0.1 % TiO$_2$)

The following components were mixed with a screw agitator (speed from 900 to 1800 rpm) in a 1000 cc container made of high-density polyethylene:

- 236.73 grams of high-purity methylmethacrylate;
- 51.96 grams of methymethacrylate polymer;

The mixture was agitated until complete dissolution of the polymethylmethacrylate (PMMA) polymer.

Then, the following components were added:

- 0.60 grams of silane DYNASYLAN MEMO 3-(trimethoxysilil) propyl methacrylate;

- 0.30 grams of DEGUSSA TiO$_2$ P-25;

Minimum mixing of 2.30 hours and addition of the following components:

- 2.25, 1.50, 6.00 grams of cross-linking agents, respectively EGDM - TEGDM - TMPTM;
- 0.45 g of stearate zinc.

Variable quantities of methacrylic acid (AMA) and isopropylamine (IPA) were used as silanization catalysts, from 0.10 to 0.11 grams.

Preparation and polymerization of the material occur as illustrated above.

**EXAMPLE 4** (PMMA with 1% TiO$_2$)

The following components were mixed with a screw agitator (speed from 900 to 1800 rpm) in a 1000 cc container made of high-density polyethylene:

- 306.76 grams of high-purity methylmethacrylate;
- 67.36 grams of methymethacrylate polymer;

The mixture was agitated until complete dissolution of the polymethylmethacrylate (PMMA) polymer.
Then, the following components were added:

- 8.00 grams of silane MEMO 3-(trimethoxysilil) propyl methacrylate;
- 4.00 grams of DEGUSSA TiO$_2$ P-25;

Minimum mixing of 2.30 hours and addition of the following components:

- 3.30, 2.00, 8.00 grams of cross-linking agents, respectively EGDM - TEGDM - TMPTM;
- 0.60 g of stearate zinc.

Variable quantities of methacrylic acid (AMA) and isopropylamine (IPA) were used as silanization catalysts, from 0.13 to 0.15 grams.
Preparation and polymerization of the material occur as illustrated above.

**EXAMPLE 5** (PMMA with 2.25% TiO$_2$)

The following components were mixed with a screw agitator (speed from 900 to 1800 rpm) in a 1000 cc container made of high-density polyethylene:

- 220.86 grams of high-purity methylmethacrylate;
- 48.48 grams of methymethacrylate polymer;

The mixture was agitated until complete dissolution of the polymethylmethacrylate (PMMA) polymer.
Then, the following components were added:

- 13.50 grams of silane DYNASYLAN MEMO 3-(trimethoxysilil) propyl methacrylate;
- 6.75 grams of DEGUSSA TiO$_2$ P-25;

Minimum mixing of 2.30 hours and addition of the following components:

- 2.25, 1.50, 6.00 grams of cross-linking agents, respectively EGDM - TEGDM - TMPTM;
- 0.45 g of stearate zinc.

Variable quantities of methacrylic acid (AMA) and isopropylamine (IPA) were used as silanization catalysts, from 0.10 to 0.11 grams.
Preparation and polymerization of the material occur as illustrated above.

**EXAMPLE 6** (Neutral dispersion 4.5% TiO$_2$)

The following components were mixed with a screw agitator (speed from 900 to 1800 rpm) in a 1000 cc container made of high-density polyethylene:

- 215.31 grams of high-purity methylmethacrylate;
- 47.28 grams of methymethacrylate polymer;

The mixture was agitated until complete dissolution of the polymethylmethacrylate (PMMA) in MMA.
Then, the following components were added:

- 13.50 grams of silane DYNASYLAN MEMO 3-(trimethoxysilil) propyl methacrylate;
- 13.50 grams of DEGUSSA TiO$_2$ P-25;

Minimum mixing of 2.30 hours and addition of the following components:

- 2.25, 1.50, 6.00 grams of cross-linking agents, respectively EGDM - TEGDM - TMPTM;
- 0.45 g of stearate zinc.

Variable quantities of mixtures of methacrylic acid and isopropylamine were used as silanization catalysts, respectively 0,11 and 0,10 grams.
Preparation and polymerization of the material occur as illustrated above.

**EXAMPLE 7** (Complete dispersion with 0.31 % of TiO$_2$)

The next step was the addition of the mineral extender to the polymeric dispersion, composed of silica, silicate, wollastonite, quartz, in such manner to obtain a material adapted to produce kitchen sinks, shower trays, bathtubs, washbasins and surfaces.
This preparation can be made according to the specific needs, operating with a large interval of quantities. In one embodiment of the present invention, the preparation was made according to the procedure illustrated here below: A polymeric material with self-cleaning surface was obtained by means of dispersion in mass of TiO$_2$ in presence of the siloxane 3-(trimethoxylsilyl) propyl methacrylate function. The siloxane group allows for anchoring TiO$_2$ to the structure of the polymeric material, and simultaneously acts as disgregating agent.
The preparation of the dispersion begins with the preparation of the polymeric matrix enriched with SiO$_2$ and photocatalytic TiO$_2$. The following components were mixed with a screw agitator (900-1800 rpm) in a 1000 cc container made of high-density polyethylene:

- 295.75 grams of high-purity methylmethacrylate;
- 73.15 grams of methymethacrylate polymer;

The mixture was agitated until complete dissolution of the polymethylmethacrylate (PMMA) in MMA.
Then, the following components were added:

- 3.75, 2.50 grams of cross-linking agents, respectively EGDM, TEGDM;
- 5.50 grams of silane DYNASYLAN MEMO 3-(trimethoxysilil) propyl methacrylate;
- 5.00 grams of DEGUSSA TiO$_2$ P-25;
- 0.18 and 0.17 grams of methacrylic acid (AMA) and isopropylamine (IPA) as silanization catalysts;

Then, the following components are added:

- 113.25 grams of Silica B00012;
- 0.75 grams of Zn-stearate as releasing agent;

Preparation occurs by mixing the aforesaid components in the following order; first, methylmethacrylate and methylmethacrylate polymer (PMMA) are mixed, followed by cross-linking agents (TEGDM and EGDM); so, only the organic part is mixed, whereas successively DYNASYLAN MEMO (3-(trimethoxysilil)propyl methacrylate) is added, followed by P-25 TiO$_2$, AMA and IPA. This guarantees that TiO$_2$ interacts with the siloxane function before the addition of silica in excess with respect to TiO$_2$. The Ti-O-Si bond is sufficiently strong, excluding competition phenomena between silica B0012 and the siloxane function ($-Si(OCH_3)_3$) and guaranteeing anchoring of phyocatalytic $TiO_2$ to the polymeric structure. Then, silica B0012 and Zn-stearate are added, and the dispersion is left rolling for at least 6 hours, being this the time needed by silica to bind with the siloxane functions that are still free.

The second step is to use the neutral dispersion of example 5 with photocatalytic $TiO_2$ (DQ $TiO_2$) to produce a dispersion with glass microspheres with different grain-size (msv (0-50 m) and (MSV (63-212 m)), oat-colored quartz and beige pigment. The dispersion is prepared by adding the following components:

- 154.15 grams of dispersion (DQ $TiO_2$);
- 34.50 grams of glass microspheres (MSV) with different grain-size (0-50 micron);
- 69.00 grams of glass microspheres (MSV) with grain-size from 63 to 212 micron;
- 241.50 grams of oat-colored quartz;
- 0.85 grams of BEIGE 7264 COMAST coloring paste;

In this step, the components can be mixed without a precise order, as in the case of the DQ $TiO_2$ preparation, because the aggregation and reaction processes occur regardless of the order of addition. The dispersion is mixed for 30 minutes, then 0.5% of Perkadox radicalic polymerization catalyst and 0.3% of stearic acid as releasing agent are added. Polymerization of the material occurs thermally, through the administration of heat, as illustrated above.

The photocatalytic activity of the composite material of example 7 with 0.31% of photocatalytic $TiO_2$ was controlled. Just like in the case of the preparation of polymeric materials with $TiO_2$, the photocatalytic activity of the finished product was controlled by immersing the composite material of example 7 with 0.3% of photocatalytic $TiO_2$ in a solution of 0.0025 M f methylene blue and eosin Y, measuring the time needed to degrade said coloring agents. Degradation was made using a Xenon lamp (SolarBox 1500 e, 25 mW/cm$^2$, 280-400 nm, outdoor filter) and coloration was monitored with colorimetric measurement (Color I7 X-Rite). Measurements were made after exposure of 60, 90, 150, 210, and 270 minutes and colorimetric variation was expressed in function of E.

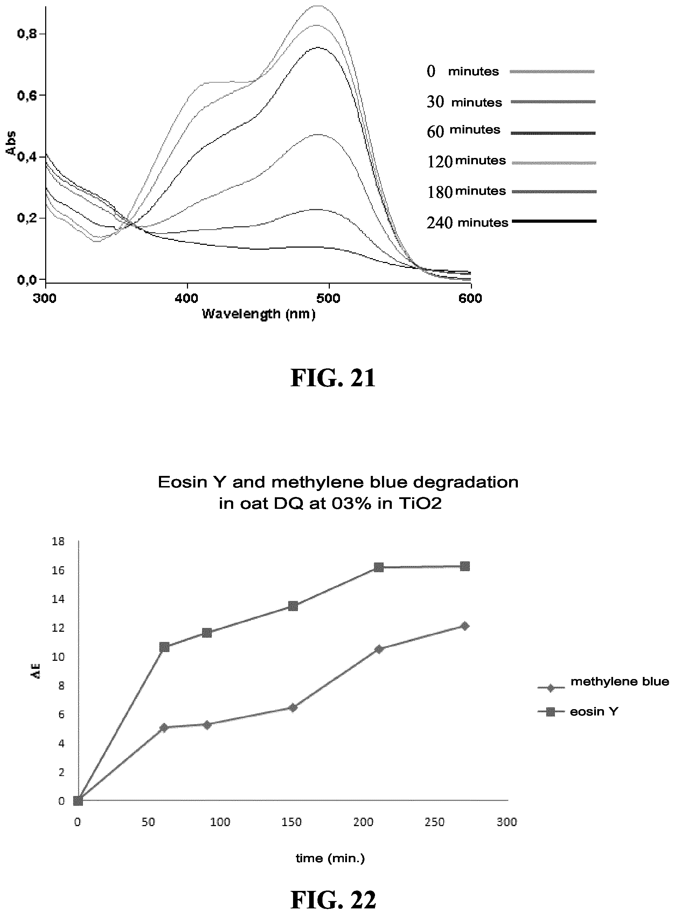

Fig. 22 shows the degradation of eosin Y and methylene blue by a sample of example 7 with 0.31% of photocatalytic $TiO_2$. The results show that the coloring agents are degraded by $TiO_2$. This is very important because it allows for defining the surface of the material of example 7 as self-cleaning. Moreover, it confirms that $TiO_2$ is bound with the structure of polymethylmethacrylate because it emerges on the surface. A comparison of the E values shows that the self-cleaning activity of the material is positioned below the one recorded for a sample with 0.5% of $TiO_2$, being a behavior in total compliance with the previously obtained data.

As it can be noted, in all samples of examples 1-7, Silane was added in percentage double than $TiO_2$ The dispersion of $TiO_2$ and the disgregation of the catalyst are guaranteed both by the nanometric dimensions of P-25 $TiO_2$ (average diameter approx. 21 nm) and the presence of the siloxane group in excess with respect to $TiO_2$. In all tests the four materials containing 0.05, 0.1, 0.5, 1, 2.25 and 4.5% of $TiO_2$ showed a high dispersion and homogeneity level of $TiO_2$, without decantation phenomena.

The preparation of cross-linked acrylic material is rather easy. Materials are simultaneously combined, with the only exception of Zn-stearate, which is added 15 minutes before the polymerization of the material. The addition of Zn-stearate is made during the last phase, in order to avoid the formation of bubbles because, in addition to being a releasing agent, Zn-stearate is also a surface-active agent.

The mixture is agitated with a screw agitator for 2.30 h at 900 rpm, and the speed of the agitator is increased to 1800 rpm in the last 30 minutes, in order to guarantee complete disgregation of $TiO_2$. Finally, 0.5% of Perkadox and 0.15% of Zn-stearate are added to the dispersion and the mixture is agitated for additional 30 minutes at 900 rpm. Finally, the material is poured in the molds and polymerization is carried out at 65.0°C for 1 hour.

TESTS ON POLYMERIC MATRIX SAMPLES

The photocatalytc activity of the self-cleaning materials was controlled by measuring the following parameters:

a) Self-cleaning of stained surfaces with:

- eosin;
- methylene blue;

b) Quantitative degradation of oleic acid with GC-MS measurement;
c) Quantitative degradation of methyl red with colorimetric measurement;
d) Variation of contact angle before and after spraying the surface with solvents:

- $H_2O$ (polar solvent);

-　　$CH_2I_2$ (apolar solvent);

e) Bactericidal and fungicidal activity of $TiO_2$;
f) Improvement of the mechanical performance of PMMA according to the contents of $TiO_2$;

a) Self-cleaning of stained surfaces

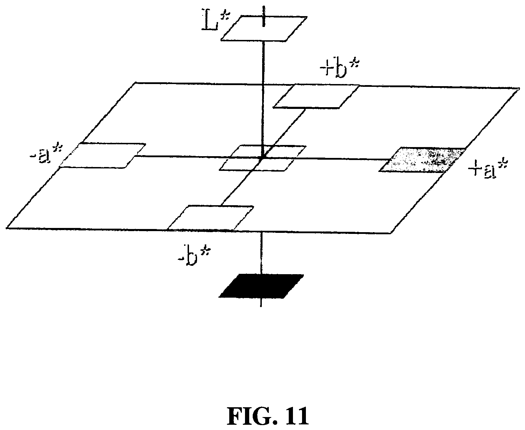

This test evaluates the degradation capacity of $TiO_2$ against some coloring agents, such as eosin and methylene blue. It is a merely qualitative test that measures the time taken by the photocatalytic $TiO_2$ to clean the surface of the material stained with the aforementioned coloring agents. Evaluation was made by immersing the samples in a solution 0.0025 M of eosin Y and methylene blue. The samples were left in the solution for 60 minutes in such manner that the surface is uniformly stained and the pigment is allowed time to adhere to the surface and $TiO_2$. Then, the samples were exposed to a Xenon lamp for 60, 90, 150, 210, and 270 minutes. The photocatalytic activity of $TiO_2$ was evaluated by measuring the coloration variation of the stained surfaces before and after exposure to the Xenon lamp (Solar Box 1500 e, 280-400 nm, 45 mW/cm$^2$, Temp. = 45°C). The pigment decoloration by $TiO_2$ was measured by monitoring the reflectance of the coloring agent positioned on the surface and measured with Color I7 X-Rite colorimeter. The reflectance variation is expressed with the E value that is the coloration variation in the field of red, green, yellow and blue, and according to the brightness level; each variable is given a value on the Cartesian plane X, Y and axis Z, as shown in Fig. 11. The E value expresses the chromatic variation according to parameters a, b and L with the following equation:

$$\Delta E = \sqrt{\Delta L^2 + \Delta a^2 + \Delta b^2}$$

therefore, the ∆E value expresses the variation of the chromatic coordinates for a specific pigment or, more generally, expresses its chromatic variation with a numerical figure. In the decoloration test of eosin Y and methylene blue, a strong decoloration of the surface in only 270 minutes was observed. The ∆E measure represents the coloration variation between the standard, which is the coloration of the stained plate not exposed to light yet, and the samples exposed to radiation from the Xenon lamp. The photocatalytic activity is illustrated in Table 3, which shows the chromatic variation ∆E measured with Color i7 X-Rite colorimeter.

Table 3

| Time | PMMA | | Ti 0.5% | | Ti 1% | | Ti 2.25% | | Ti 4.5% | |
|------|------|------|---------|------|-------|------|----------|------|---------|------|
| | E | | E | | E | | E | | E | |
| minutes | methylene blue | eosin Y | methylene blue | eosin Y | methylene blue | eosin Y | methylene blue | eosin Y | methylene blue | eosin Y |
| 0 | 0 | 0 | 0 | 0 | 0 | 0 | 0 | 0 | 0 | 0 |
| 60 | 0.97 | 2.38 | 5.39 | 10.19 | 9.88 | 15.9 | 11.85 | 18.15 | 17.18 | 19.22 |
| 90 | 0.70 | 6.52 | 8.05 | 14.73 | 11.61 | 20.5 | 14.33 | 22.39 | 21.14 | 31.82 |
| 150 | 1.12 | 9.09 | 8.67 | 17.98 | 12.32 | 23.3 | 14.20 | 25.58 | 22.85 | 36.06 |
| 210 | 1.11 | 12.20 | 9.69 | 21.87 | 13.07 | 27.4 | 14.51 | 29.36 | 23.74 | 38.28 |
| 270 | 0.65 | 14.60 | 13.57 | 24.66 | 16.04 | 27.1 | 15.57 | 29.30 | 24.91 | 38.82 |

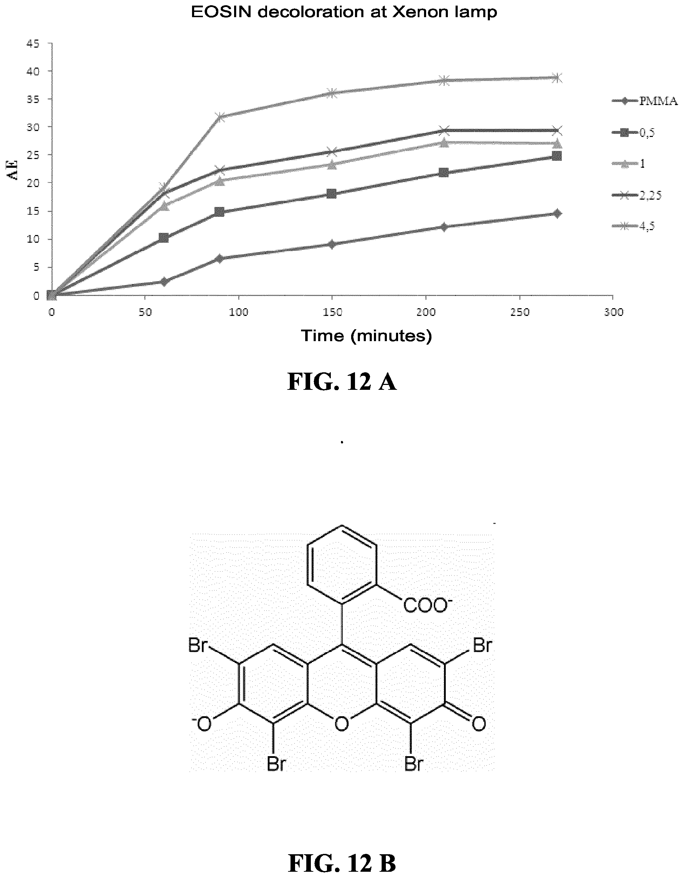

Fig. 12A shows the trend of $\Delta E$ of eosin Y coloration measured with colorimeter, after exposure to Xenon lamp (Solar Box 1500 e, 280-400 nm, 45 mW/cm$^2$, Temp. = 45°C).

Fig. 12B shows the molecular structure of eosin Y.

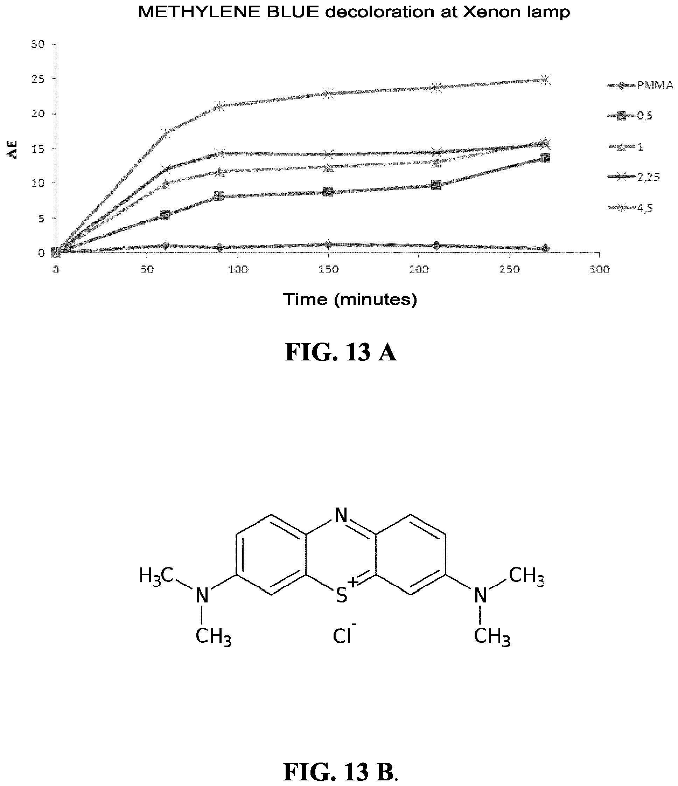

Fig. 13A shows the trend of $\Delta E$ of methylene blue coloration measured with colorimeter, after exposure to a Xenon lamp (Solar Box 1500 e, 280-400 nm, 45 mW/cm$^2$, Temp. = 45°C).

Fig. 13B shows the molecular structure of methylene blue.

As shown in the charts of Figs. 12A and 13A, decoloration of eosin Y and methylene blue increases upon increasing the contents of $TiO_2$. It is worth noting that most degradation occurs in the first 60 minutes of exposure of the samples to the Xenon lamp.

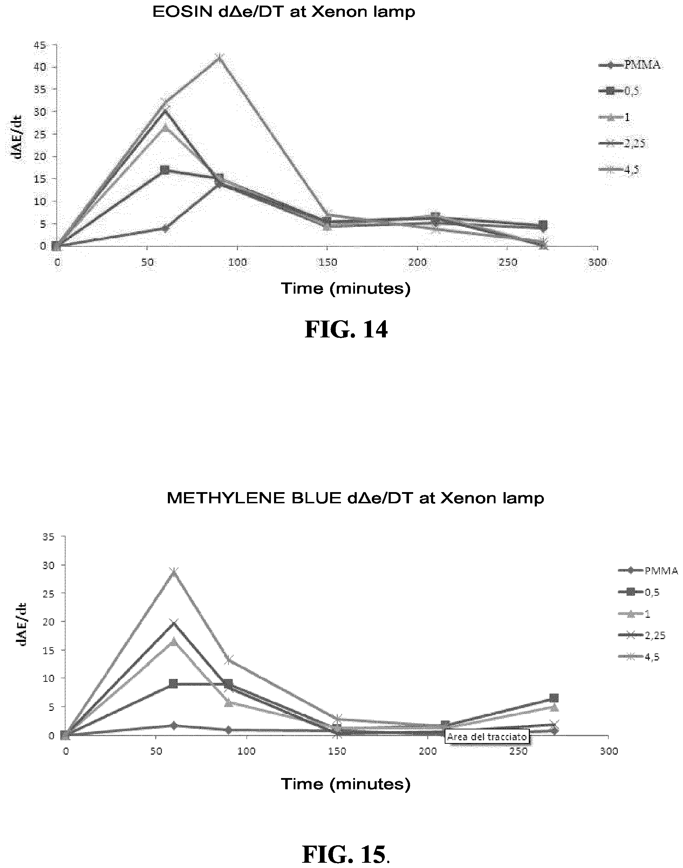

Fig. 14 shows the trend of eosin Y decoloration according to time after exposure to a Xenon lamp (Solar Box 1500 e, 280-400 nm, 45 mW/cm$^2$, Temp. = 45°C).

Fig. 15 show the trend of methylene blue decoloration according to time after exposure to a Xenon lamp (Solar Box 1500 e, 280-400 nm, 45 mW/cm$^2$, Temp. = 45°C).

A study of the degradation of coloring agents positioned on the surface of PMMA without $TiO_2$ shows that methylene blue is not degraded from the visible radiation, whereas eosin degradation is observed following to exposure to the Xenon lamp, although with lower extent than the one recorded in presence of $TiO_2$.

Moreover, the examination of $\Delta E/dt$ graphs of eosin and methylene blue shows that Ti 0.5% degrades pigments more slowly. This can be noted with the enlargement of peak between 60 and 90 minutes with respect to samples of Ti 1 and 2.25%.

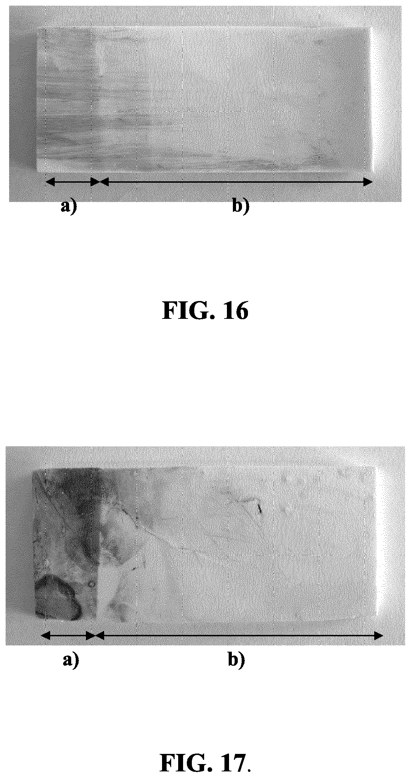

Fig. 16 shows the degradation of eosin Y positioned on a polymethylmethacrylate plate with 4.5% of $TiO_2$ after exposure to a Xenon lamp (Solar Box 1500 e, 280-400 nm, 45 mW/cm$^2$, Temp. = 45°C) for 270 minutes.

Fig. 17 shows the degradation of methylene blue positioned on a polymethylmethacrylate plate with 4.5% of $TiO_2$ after exposure to a Xenon lamp (Solar Box 1500 e, 280-400 nm, 45 mW/cm$^2$, Temp. = 45°C) for 270 minutes.

b) Quantitative degradation of oleic acid with GC-MS measurement

This test was used to make a quantitative evaluation of the self-cleaning capacity of the material with $TiO_2$ to destroy organic molecules. The chosen substrate, viz. the molecule to be degraded by $TiO_2$, was oleic acid (or cis-9-octadecenoic acid). The importance of this molecule is that, in addition to being a substance with a strong paraffin character, it is the most important fat acid present in nature as triglyceride in animal fats and vegetable oils. Oleic acid is especially contained in olive oil. For this reason, measuring the photodegradation capacity of $TiO_2$ against this substance is of fundamental importance in view of its application in the production of kitchen sinks with self-cleaning properties. The degradation of oleic acid by the photocatalytic $TiO_2$ was carried out on two samples of polymethylmethacrylate with 0.5 and 1% of $TiO_2$. The two plates with 2 cm x 2 cm dimensions were positioned in two 250 ml flasks. Then, 25 ml of a solution of oleic acid at 1000 pm were added to the flask. The two solutions were left in the dark under agitation for 60 minutes in such manner to permit absorption of the oleic acid on the surface of the polymeric material. Successively, the two samples were irradiated by the UV lamp (Cole Parmer VL-215.G, 2 15W-254 nm tubes, wattage = 60W) and the concentration of oleic acid in solution was measured after 15, 30, and 60 minutes of irradiation. The solution was maintained under agitation for the entire duration of the test, in a $H_2O$ bath at approximately 20°C, using a bubble condenser to avoid solvent evaporation. The degradation of oleic acid was made by measuring its concentration with a gas chromatograph interface with a flame ionization detector (GC-FID) and the instrument was calibrated according to the internal standard technique with hexadecane at 200 ppm. Both samples gave excellent results, because in only 60 minutes of exposure to the UV lamp, the sample with $TiO_2$ at 0.5 and 1% consumed more than 200 and 300 ppm of oleic acid. Results are shown in Table 4, which illustrates monitoring of the concentration of oleic acid at 1000 ppm contained in 25 ml after exposure to 15, 30 and 60 minutes to the UV lamp.

Table 4

| Time | Oleic acid (Ti 0.5%) | Oleic acid (Ti 1%) |
| --- | --- | --- |
| (minutes) | (ppm) | (ppm) |
| 0 | 970.60 | 996.00 |
| 15 | 869.30 | 875.40 |
| 30 | 820.90 | 705.80 |
| 60 | 766.70 | 646.10 |

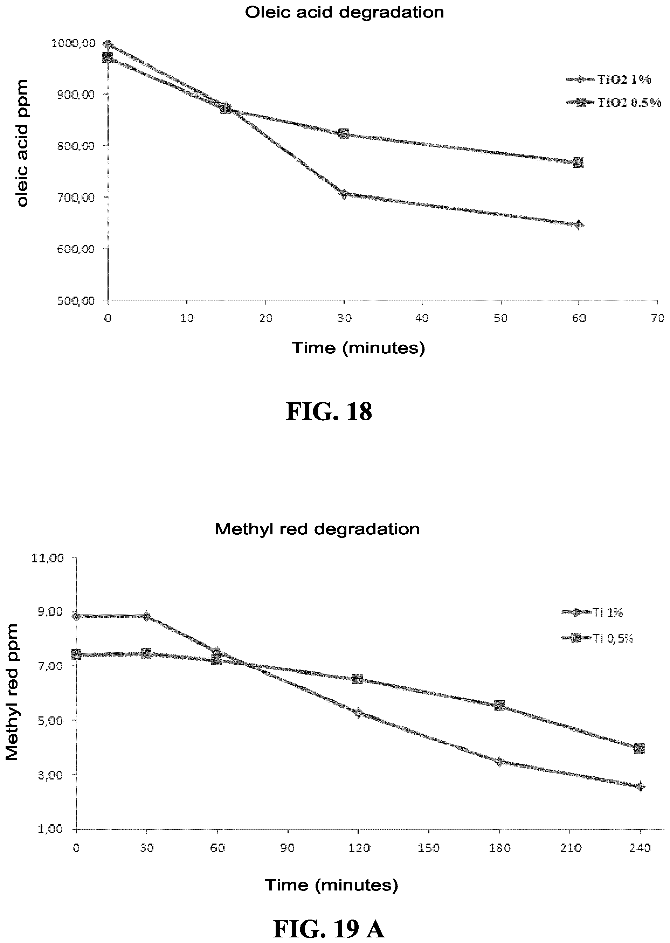

Fig. 18 shows the concentration of oleic acid not degraded by the photocatalytic $TiO_2$ over time for the two samples with 0.05 and 1% of $TiO_2$.

Upon analyzing the data, it can be observed that degradation of oleic acid by $TiO_2$ occurs rather constantly over time, especially in the case of the sample with 1% of photocatalytic $TiO_2$. A clear datum is that after only 15 minutes a sharp reduction of the concentration of oleic acid is observed. This is rather characteristic for $TiO_2$ and the phenomenon demonstrates that $TiO_2$ can carry out its degradation activity also in the dark, by simple exposure to ambient light.

c) Quantitative degradation of methyl red with colorimetric measurement;

This test intends to show the photocatalytic degradation activity of the polymeric material with $TiO_2$ against organic coloring agents. The coloring agents can be non-dangerous molecules of animal or vegetable origin, whereas other molecules can be of synthetic origin and can have a potentially toxic activity, such as the ones using in the tan industry. These pigments are characterized by the azo chromophore group (-N=N-). For this reason, methyl red was used as substrate to evaluate the photocatalytic activity of $TiO_2$. The test was carried out with the same modes used to study the degradation of oleic acid, with some differences: in this case, the variation of concentration of methyl red was made with colorimetric measurement, measuring the absorbance of the solution at 453 nm after 30, 60, 120, 180 and 240 minutes of exposure to the lamp. The concentration of methyl red not degraded by $TiO_2$ is determined with the absorbance value of the solution at different time intervals. Moreover, this test was made using the Xenon lamp (SolarBox 1500 e, 25 mW/cm$^2$, 45°C, 280-400 nm, outdoor filter). The self-cleaning activity was tested on two samples of PMMA with 0.5 and 1% of P-25 $TiO_2$. The two plates were immersed, respectively, in 35 ml of methyl red at 7.40 and 8.82 ppm in ethanol. Fig. 19A shows that degradation of methyl red occurs in both cases and the destruction of the pigment is more accentuated in the sample containing 1% of photocatalytic $TiO_2$. The plate with 1% of $TiO_2$ reduces the concentration of methyl red from 8.82 to 2.57 ppm, whereas the sample with 0.5% reduces the initial concentration from 7.40 ppm to 3.94 ppm. A blank test was made to evaluate the capacity of the Xenon lamp to destroy methyl red in 240 minutes and in absence of photocatalytic $TiO_2$. From reading the absorbance values of the solution before and after exposure to the lamp, a reduction of concentration of methyl red of 0.35 ppm was observed, passing from an initial concentration of 7.01 ppm to a final concentration of 6.66 ppm.

Table 5 shows the concentration trend of methyl red in the presence of the two photocatalysts (containing 1 and 0.5% of $TiO_2$), monitoring the concentration of methyl red after exposure for 240 minutes to a Xenon lamp.

Table 5

| Time | Methyl red (Ti 1%) | Methyl red (Ti 0.5%) |
|---|---|---|
| (minutes) | (ppm) | (ppm) |
| 0 | 8.82 | 7.40 |
| 30 | 8.83 | 7.44 |
| 60 | 7.55 | 7.21 |
| 120 | 5.28 | 6.49 |
| 180 | 3.47 | 5.52 |
| 240 | 2.57 | 3.94 |

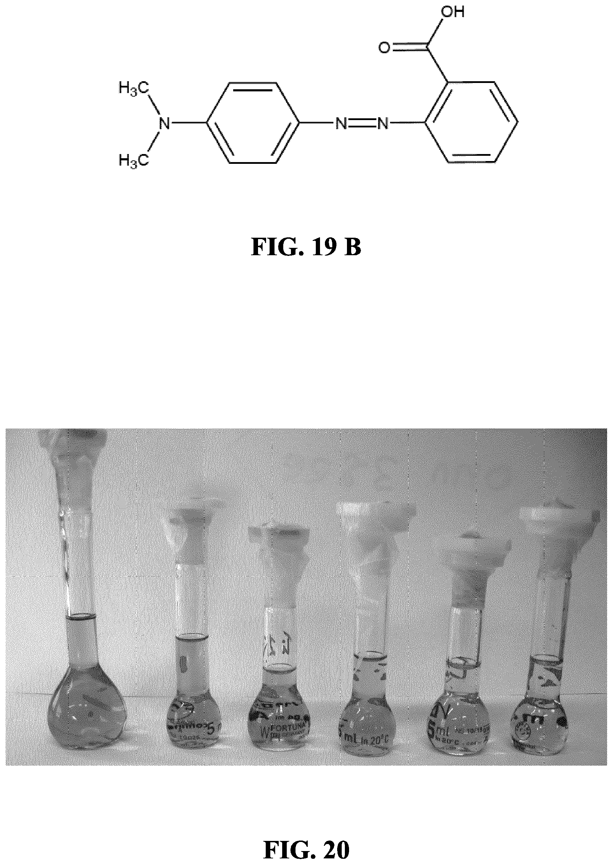

Fig. 19B shows the molecular structure of methyl red;

Fig. 20 shows the coloration variation of the solution at 8.82 ppm of methyl red after being irradiated for 240 minutes in the presence of a sample of PMMA added with 1% of $TiO_2$; as it can be seen, after 240 minutes, the solution is almost colorless, thus demonstrating the degradation of the coloring agent.

Fig. 21 shows the absorption spectrum (600-300 nm) of the methyl red solution at 8.82 ppm after exposure to Xenon lamp for 240 minutes and in presence of PMMA with 1% of $TiO_2$. As it can be noted from Fig. 21, after 60 minutes of exposure to the Xenon lamp, absorbance of methyl red is halved after every hour of exposure to light.

d) Variation of contact angle before and after irradiation of the surface:

The measurement of the contact angle towards polar solvents ($H_2O$) and apolar solvents ($CH_2I_2$) was made on a material containing 0.05% of $TiO_2$ and 0.0075% of $SiO_2$. With the exposure to light of the polymeric material, a reduction of the contact angle of the water is observed, passing from an initial value of 80.3° to 60.9° after exposure to a Xenon lamp for 40 minutes (Solar Box 1500 e, 280-400 nm, 25 mW/cm$^2$, Temp. = 45°C). In the same condition, a reduction of the contact angle is observed also for apolar solvents, such as $CH_2I_2$, passing from an angle of 65.3° to 17.10°, after only 15 minutes of exposure to the Xenon lamp (Solar Box 1500 e, 280-400 nm, 25 mW/cm$^2$, Temp. = 45°C).

Fig. 5 shows the trend of the contact angle of $H_2O$ after exposure to Xenon lamp (Solar Box 1500 e, 280-400 nm, 25 mW/cm$^2$, Temp. = 45°C) for 60 minutes.

Fig. 6 shows the trend of the contact angle of $CH_2I_2$ after exposure to Xenon lamp (Solar Box 1500 e, 280-400 nm, 25 mW/cm$^2$, Temp. = 45°C) for 15 minutes.

In both cases a reduction of the contact angle of the polar and apolar liquids is observed as consequence of the variation of the surface tension of P-25 $TiO_2$, when P-25 $TiO_2$ is excited by the light. The reduction of the contact angle in both cases follows an exponential trend, which is much more accentuated for organic solvents because the polymeric matrix is of organic, therefore paraffin nature. The capacity of P-25 $TiO_2$ to reduce the contact angle for polar and apolar substances is defined as *amphiphilic* and this property extends to the entire surface of the polymer. The reduction of the contact angle is fundamentally important in the production of an easy-to-clean material because it changes the wettability of the product surface. In such a case, the photocatalytic activity of $TiO_2$ P-25 increases the wettability of the surface. Both polar solvents, like water, and apolar solvents, such oils, form a homogeneous compact layer on the surface, which keeps dirt and fat away by making liquids slide on the surface.

e) Bactericidal and fungicidal activity of $TiO_2$;

Some tests made on gypsum materials with surface functionalized with photocatalytic $TiO_2$ showed excellent results because they inhibit the bacterial growth of some organisms, such as *Aspergillus niger* (mold), *Candida albicans* (yeast), *Escherichia coli* (gram-negative bacterium) and *Staphylococcus aureus* (gram-positive bacterium). The tests were carried out in accordance with the ASTM 3273-82 method specific for molds and extended also to the aforementioned microorganisms. A test was made on the bactericidal and fungicidal activity of a polymeric material with 2.25% of photocatalytic $TiO_2$, evaluating the inhibition to microbial growth of the following organisms:

- *Escherichia coli beta glucuronidase positive;*
- *Salmonellas;*
- *Staphylococci coagulasi pos. (S. aureus);*
- *Listeria monocytogenes;*
- *Pseudomonas aeruginosa;*
- *Legionnaires sp.;*
- *Enterococci;*

Table 6 shows the results and the norms followed to determine the inhibitory activity of $TiO_2$ dispersed at 2.25% in PMMA against the growth of 200 colonies of the following organisms:

Table 6

| MICROORGANISMS | UNIT OF MEASUREMENT | NUMBER OF COLONIES | REFERENCE STANDARDS FOR TESTS |
|---|---|---|---|
| Escherichia coli beta glucuronidase pos. | UFC/cm$^2$ | 5,0 x10^1 | ISO 18593:2004, ISO 16649-2:2001 |
| Salmonellas | in 50 cm$^2$ | 2,0 x10^1 | ISO 18593:2004, UNI EN ISO 6579:2008 |
| Staphylococci coagulase pos. (S. aureus); | UFC/cm$^2$ | 1,8 x10^1 | ISO 18593:2004, UNI EN ISO 6888-1 :2004 |
| Listeria monocytogenes | in 50 cm$^2$ | 6 | ISO 18593:2004, UNI EN ISO 11290-1:2005 |
| Pseudomonas aeruginosa | UFC/cm$^2$ | 2,0 x10^1 | ISO 18593:2004, ISO 13720:1995 |
| Legionnaire sp. | UFC/cm$^2$ | 1,5 x10^1 | ISO 18593:2004, Guidelines (national) 04/04/2000 GU no. 103 All. 2 05/05/2000 |
| Enterococci | UFC/cm$^2$ | 9 | ISO 18593:2004, APHA "Compendium of methods for the Microbiological examination of food" Chapter 9 Ed. IV 2001 |

Table 6 contains an evaluation of the inhibitory activity of photocatalytic $TiO_2$ dispersed at 2.25% in PMMA.

In all cases an inhibitory activity of the aforementioned microorganism is observed, particularly a strong reduction of the number of colonies of Listeria monocytogenes, Stafilococchi coagulasi pos. (S.aureus), Legionella sp. and Enterococchi is noted.

g) Improvement of the mechanical performance of PMMA according to the contents of $TiO_2$;

The photocatalytic $TiO_2$ is a new hybrid (organic - inorganic) material. The incorporation of flexible organic polymer segments in an organic cross-link can considerably reduce compression and breakdown problems, while maintaining the advantages of the properties of inorganic materials, such as good chemical resistance, high electrical stability, and excellent tensile strength.

This new self-cleaning material is an innovative material, with excellent mechanical, chemical and physical properties. As shown in the graph of Fig. 10, tg passes from a value of 56.6°C for polymeric material without $TiO_2$ to a value of 94.7°C, when the contents of $TiO_2$ reaches 4.5%. The tg values are listed in Table 2, which shows the trend of the glass transition temperature (tg) of polymeric materials according to the contents of $TiO_2$ (0.05, 0.1, 0.5, 1, 2.25, 4.5%).

The contribution of $TiO_2$ to the tg of the polymeric matrix with methacrylic resin base is so high that it can increase the tg by 1.6 times compared to the simple polymeric resin, passing from 56.6°C for simple PMMA to 94.7°C for polymethylmethacrylate with 4.5% of $TiO_2$.

Table 7 shows the variation of the glass transition temperature (tg) of the PMMA according to the contents of photocatalytic $TiO_2$.

Table 7

| CONTENTS OF $TiO_2$ IN PMMA | tg |
| --- | --- |
| PMMA | 56.6 °C |
| Ti 0.05% | 58.1 °C |
| Ti 0.1% | 66.7 °C |
| Ti 0.5% | 69.7 °C |
| Ti 1% | 74.3 °C |
| Ti 2.25% | 86.9 °C |
| Ti 4.5% | 94.7 °C |

It must be considered that a fundamental role is played by the methacrylic dispersion comprising a silane, and in particular 3-(trimethoxysilil) propyl methylmethacrylate that bonds the photocatalytic $TiO_2$ to the function $-Si(OCH_3)_3$

Several analytical investigations were made in order to examine the chemical bond between Silane (3-(trimethoxysilil) propyl methilmethacrylate) and the photocatalytic $TiO_2$, using (3-(trimethoxysilil) propyl methylmethacrylate) known with the DYNASYLAN® MEMO brand.

Such a bond is shown in Figs. 3 and 4, measuring the (FT-IR) spectrum.

Additional tests are described here below:

1. Measurement of viscosity of methacrylic dispersion with Ti02 and silane

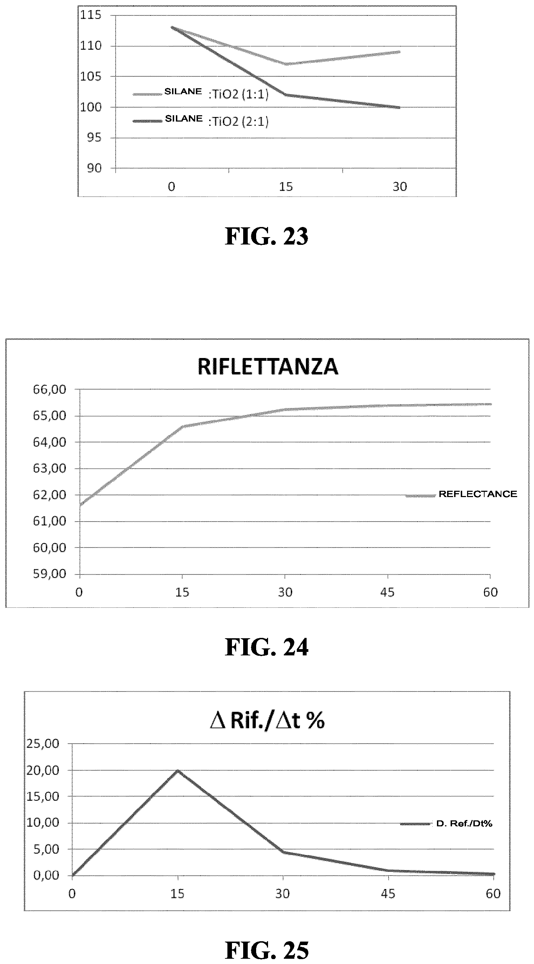

The viscosity of the dispersion added with TiO2 and silane was measured in different Silane and TiO2 ratios of 1:1 and 1:2. An evident variation of the viscosity is observed after the addition of silane to a dispersion added with $TiO_2$. Such a variation confirms the presence of direct interaction phenomena between $TiO_2$ and silane. The measurement of $TiO_2$ silanization time by reading the viscosity of dispersions otherwise added with silane gave the following results, which are shown in Fig. 24 and 23 and in the following table:

Table 8

| Time in minutes | VISCOSITY of dispersion with SILANE:$TiO_2$ (1:1) | VISCOSITY of dispersion with SILANE:TiO2 (2:1) |
| --- | --- | --- |
| 0 | 113 | 113 |
| 15 | 107 | 102 |
| 30 | 109 | 100 |

Viscosity values were measured at a temperature of 20°C. As it can be seen, in both cases a strong viscosity variation is observed upon the addition of silane, being an evident sign of the chemical bond that is established. Data shows that the highest reduction of viscosity is observed after adding silane in quantity double than titanium.

2. Measurement of reflectance variation of dispersion with $TiO_2$ and silane

A colorimetric measurement was made through the reflectance of the dispersion added with TiO2 and silane. Such a measurement made it possible to evaluate the time necessary to anchor TiO2 to silane, known as $TiO_2$ silanization time.

To evaluate the silanization time, the reflectance of the dispersion was measured over time after adding TiO2 and silane. The following data was obtained, as shown in the charts of Figs. 24 and 25 and in the following table:

Table 9

| Time | SILANE:TiO$_2$ (1:1) | REFLECTANCE | $\Delta$ref./$\Delta$t % |
|---|---|---|---|
| minutes | $\Delta$L | % | |
| 0 | 0 | 61.60 | |
| 15 | 1.80 | 64.58 | 19.86 |
| 30 | 2.16 | 65.25 | 4.47 |
| 45 | 2.24 | 65.40 | 1.00 |
| 60 | 2.25 | 65.44 | 0.27 |

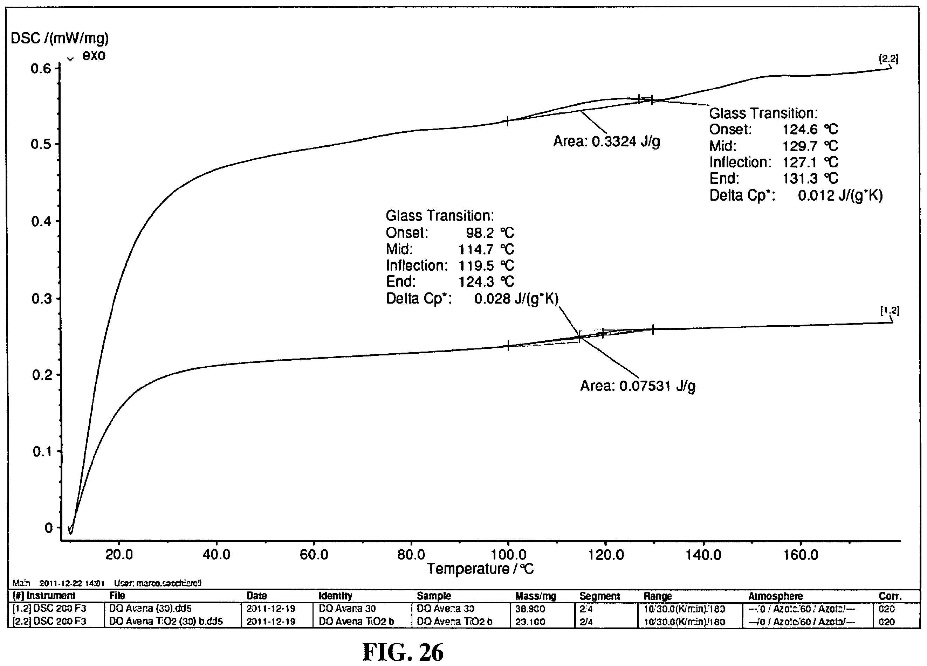

Referring to Fig. 26, which illustrates the transmittance variation, data shows that the silanization process of TiO$_2$ (TiO2:silane ratio 1:1) occurs completely after 60 minutes, but more than 90% of TiO$_2$ is silanized during the first 30 minutes.

3. Measurement of variation of glass transition temperature (tg) of finished product containing quartz-based minerals and a methacrylyc dispersion without TiO$_2$ and with TiO$_2$ and silane

Through the measurement of the glass transition temperature (tg) of a sample without TiO$_2$ and a sample with Silane and TiO$_2$ it was possible to measure the contribution of the photocatalytic TiO$_2$ to the Tg of the finished product.

The instrument used was a DSC 200 F3 Maya. The graph of Fig. 26 shows an increase of Tg in presence of P-25 TiO$_2$ at 0.3% in the final dispersion. The increase of the Tg is 15°C, passing from a temperature of 114.7°C to a temperature of 129.7°C of the product with TiO$_2$.

Moreover, the areas subtended by the two energy profiles around the Tg value of the two samples in the temperature range from 100°C to 130°C were compared. The comparison showed that the area of the product with TiO$_2$ is much higher than the one without TiO$_2$, approximately 4 times higher, respectively 0.3324 and 0.07531 J/g. Since the area subtended by the graph is proportional to the thermal capacity of the material, it can be said that the thermal capacity of the product with TiO$_2$ is higher than the one of the product without TiO$_2$.

4. Visible cross-link on surface of finished product

In this example the finished product is a sink obtained from the mixture of quartz-based minerals with a methacrylic dispersion containing Ti02 and silane. Reticulation is visible at the naked eye because the surfaces of the sinks show a very reticulated surface, with extremely mat finish and very good aesthetic appeal. This surface is very different from surfaces where titanium dioxide is not bound with silane, which on the contrary appear very glossy, non-homogeneous in terms of opacity and not too reticulated.

Numerous variations and modifications can be made to the present embodiments of the invention, within the reach of an expert of the field, while still falling within the scope of the invention described in the enclosed claims.

## Claims

1.   A self-cleaning composite material for production of molded items comprising the following composition:

   - 65-80% in weight of quartz-based mineral extenders;
   - 2-15% in weight of fine particles of silicate family, having dimensions lower than 0.1 mm;
   - 5-20% of glass microspheres, with grain-size lower than 212 micron;
   - 10-25% of methacrylic syrup composed of one monomer and one polymer;
   - photocatalytic titanium dioxide (TiO$_2$) dispersed in methacrylic syrup in weight percentage of 0.05-5% with respect to the weight of methacrylic syrup;
   - coupling anchoring agent between the photocatalytic TiO$_2$ and methacrylic syrup, wherein said coupling anchoring agent of TiO$_2$ is silane; and
   - cross-linking monomers to obtain reticulation of methacrylic syrup.

2.   A self-cleaning composite material as claimed in claim 1, **characterized in that** said silane acting as coupling anchoring agent of TiO$_2$ is 3-(trimethoxysilyl) propyl methacrilate bonding the photocatalytic TiO$_2$ to the function -Si(OCH$_3$)$_3$.

3. A self-cleaning composite material as claimed in claim 1 or 2, **characterized in that** said silane is in quantity double than the photocatalytic TiO$_2$.

4. A self-cleaning composite material as claimed in any one of the preceding claims, **characterized in that** said composition also comprises silanization catalysts, such as isopropylamine (IPA) and/or methacrylic acid (AMA).

5. A self-cleaning composite material as claimed in any one of the preceding claims, **characterized in that** said photocatalytic titanium dioxide is in anatase form and in powder with grain-size lower than 300 nm.

6. A self-cleaning composite material as claimed in any one of the previous claims, **characterized in that** said methacrylic syrup comprises a mixture of methyl methacrylate (MMA) and polymethyl methacrylate (PMMA) in weight percentage of approximately 35 - 38% with respect to MMA.

7. A self-cleaning composite material as claimed in any one of the preceding claims, **characterized in that** said cross-linked monomers comprise diethylenglycol dimethacrylate (EGDM), tetraethylenglycol dimethacrylate (TEGDM) and trimethylolpropane trimethacrylate (TMPTMA).

8. A self-cleaning composite material as claimed in any one of the preceding claims, **characterized in that** said fine particles of the silicate family comprise wollastonite, calcium silicate, cristobalite.

9. A production process of a self-cleaning composite material for production of molded items, comprising the following steps:

- Mixing of one monomer and one polymer to obtain methacrylic syrup, in quantity equal to 10 - 25% in weight of the final product;
- Dispersion of photocatalytic titanium dioxide (TiO$_2$) in methacrylic syrup in weight percentage of 0.05-5% with respect to the weight of methacrylic syrup;
- Agitation of mixture of methacrylic syrup and photocatalytic titanium dioxide (TiO$_2$);
- Addition of the following components to mixture: 65-80% in weight of quartz-based mineral extenders; 2-15% in weight of fine particles of silicate family with dimensions lower than 0.1 mm; 5- 20% of glass microspheres, with grain-size lower than 212 micron; coupling anchoring agent between photocatalytic TiO$_2$ and methacrylic syrup; and cross-linking monomers to obtain reticulation of methacrylic syrup; wherein said coupling anchoring agent of TiO$_2$ is silane;
- Agitation of final mixture;
- Polymerization of mixture in a mold.

10. A process as claimed in claim 9, **characterized in that** said silane is added in quantity double than the photocatalytic TiO$_2$.

11. A process as claimed in claim 9 or 10, **characterized in that** said agitation steps of the mixture of methacrylic syrup and photocatalytic titanium bioxide (TiO$_2$) are made with a screw agitator at speed from 900 rpm to 1800 rpm for 3 hours before adding the other components.

12. A process as claimed in any one of claims 9 to 11, **characterized in that** said polymerization in mold is made at an initial temperature of 50°C gradually increasing to 110°C for 40 minutes.

**Patentansprüche**

1. Selbstreinigender Verbundwerkstoff zur Herstellung von Formteilen, umfassend folgende Zusammensetzung:

- 65 - 80 Gew.-% mineralische Füllstoffe auf Quarzbasis;
- 2 - 15 Gew.-% Feinpartikel aus der Familie der Silikate mit einer Größe von weniger als 0,1 mm;
- 5 - 20 % Glasmikrokugeln mit einer Partikelgröße von weniger als 212 Mikrometer;
- 10 - 25 % Methacrylsirup, bestehend aus einem Monomer und einem Polymer;
- fotokatalytisches Titandioxid (TiO$_2$), das in einem Gewichtsanteil von 0,05 - 5 % in Bezug auf das Gewicht des Methacrylsirups dispergiert ist;
- Haftvermittler zur Verankerung zwischen dem fotokatalytischen TiO$_2$ und dem Methacrylsirup, wobei der Haftvermittler zur Verankerung des $TiO_2$ Silan ist; und
- vernetzende Monomere zur Vernetzung des Methacrylsirups.

2. Selbstreinigender Verbundwerkstoff nach Anspruch 1, **dadurch gekennzeichnet, dass** das Silan, das als Haftvermittler zur Verankerung des $TiO_2$ fungiert, 3-(trimethoxysilyl)propylmethacrylat ist, welches das fotokatalytische $TiO_2$ an die $-Si(OCH_3)_3$-Funktion bindet.

3. Selbstreinigender Verbundwerkstoff nach Anspruch 1 oder 2, **dadurch gekennzeichnet, dass** das Silan in der doppelten Menge in Bezug auf das fotokatalytische $TiO_2$ vorliegt.

4. Selbstreinigender Verbundwerkstoff nach einem der vorstehenden Ansprüche, **dadurch gekennzeichnet, dass** die Zusammensetzung weiter Silanisierungskatalysatoren wie Isopropylamin (IPA) und/oder Methacrylsäure (AMA) umfasst.

5. Selbstreinigender Verbundwerkstoff nach einem der vorstehenden Ansprüche, **dadurch gekennzeichnet, dass** das fotokatalytische Titandioxid in anastatischer Form und als Pulver mit einer Partikelgröße von weniger als 300 nm vorliegt.

6. Selbstreinigender Verbundwerkstoff nach einem der vorstehenden Ansprüche, **dadurch gekennzeichnet, dass** der Methacrylsirup eine Mischung aus Methylmethacrylat (MMA) und Polymethylmethacrylat (PMMA) in einem Gewichtsanteil von ungefähr 35 - 38 % in Bezug auf das MMA umfasst.

7. Selbstreinigender Verbundwerkstoff nach einem der vorstehenden Ansprüche, **dadurch gekennzeichnet, dass** die vernetzten Monomere Ethylenglycol-Dimethacrylat (EGDM), Tetraethylenglycol-Dimethacrylat (TEGDM) und Trimethylol-Propan-Trimethacrylat (TMPTMA) umfassen.

8. Selbstreinigender Verbundwerkstoff nach einem der vorstehenden Ansprüche, **dadurch gekennzeichnet, dass** die Feinpartikel aus der Familie der Silikate Wollastonit, Calciumsilikat und Cristobalit umfassen.

9. Verfahren zur Herstellung eines selbstreinigenden Verbundwerkstoffs zur Herstellung von Formteilen, umfassend die folgenden Schritte:

- Mischen eines Monomers mit einem Polymer, um einen Methacrylsirup in einer Menge von 10 - 25 Gew.-% des Endprodukts zu erhalten;
- Dispergieren von fotokatalytischem Titandioxid ($TiO_2$) in dem Methacrylsirup in einem Gewichtsanteil von 0,05 - 5 % in Bezug auf das Gewicht des Methacrylsirups;
- Rühren der Mischung aus Methacrylsirup und fotokatalytischem Titandioxid ($TiO_2$);
- Zugeben der folgenden Bestandteile zu der Mischung: 65 - 80 Gew.-% mineralische Füllstoffe auf Quarzbasis; 2 - 15 Gew.-% Feinpartikel aus der Familie der Silikate mit einer Größe von weniger als 0,1 mm; 5 - 20 % Glasmikrokugeln mit einer Partikelgröße von weniger als 212 Mikrometer; Haftvermittler zur Verankerung zwischen dem fotokatalytischen $TiO_2$ und dem Methacrylsirup; und vernetzende Monomere zur Vernetzung des Methacrylsirups; wobei der Haftvermittler zur Verankerung des $TiO_2$ Silan ist;
- Rühren der fertigen Mischung;
- Polymerisieren der Mischung in einem Formwerkzeug.

10. Verfahren nach Anspruch 9, **dadurch gekennzeichnet, dass** das Silan in der doppelten Menge in Bezug auf das fotokatalytische $TiO_2$ zugegeben wird.

11. Verfahren nach Anspruch 9 oder 10, **dadurch gekennzeichnet, dass** die Schritte des Rührens der Mischung aus Methacrylsirup und fotokatalytischem Titandioxid ($TiO_2$) mit einem Schneckenrührwerk bei einer Geschwindigkeit von 900 U/min - 1800 U/min über einen Zeitraum von 3 Stunden ausgeführt werden, bevor die übrigen Bestandteile zugegeben werden.

12. Verfahren nach einem der Ansprüche 9 bis 11, **dadurch gekennzeichnet, dass** der Schritt der Polymerisation in dem Formwerkzeug bei einer Anfangstemperatur von 50 °C ausgeführt wird, die schrittweise auf 110 °C erhöht und 40 Minuten gehalten wird.

**Revendications**

1. Matière composite autonettoyante pour la production d'éléments moulés comprenant la composition suivante :

   - 65 - 80% en poids de charges minérales à base de quartz ;
   - 2 - 15% en poids de particules fines de la famille des silicates, ayant des dimensions inférieures à 0,1 mm ;
   - 5 - 20% de microsphères de verre, ayant une granulométrie inférieure à 212 microns ;
   - 10 - 25% de sirop méthacrylique composé d'un monomère et d'un polymère ;
   - dioxyde de Titane ($TiO_2$) photocatalytique dispersé dans le sirop méthacrylique dans un pourcentage en poids de 0,05 - 5% par rapport au poids du sirop méthacrylique ;
   - un agent de pontage d'ancrage entre le $TiO_2$ photocatalytique et le sirop méthacrylique, où ledit agent de pontage d'ancrage du $TiO_2$ est le silane ; et
   - des monomères de réticulation pour obtenir la réticulation du sirop métallique.

2. Matière composite autonettoyante selon la revendication 1, **caractérisée en ce que** ledit silane qui agit en tant qu'agent de pontage d'ancrage du $TiO_2$ est le méthacrylate de 3-triméthoxysilylpropyle qui lie le $TiO_2$ photocatalytique à la fonction $-Si(OCH_3)_3$.

3. Matière composite autonettoyante selon la revendication 1 ou 2, **caractérisée en ce que** ledit silane est présent en quantité double par rapport à la quantité de $TiO_2$ photocatalytique.

4. Matière composite autonettoyante selon l'une quelconque des revendications précédentes, **caractérisée en ce que** ladite composition comprend également des catalyseurs de Silanisation, tels que l'isopropylamine (IPA) et/ou l'acide méthacrylique (AMA).

5. Matière composite autonettoyante selon l'une quelconque des revendications précédentes, **caractérisée** en ce ledit dioxyde de titane photocatalytique est sous forme anatase et qu'il est en poudre ayant une granulométrie inférieure à 300 nm.

6. Matière composite autonettoyante selon l'une quelconque des revendications précédentes, **caractérisée** en ce ledit sirop méthacrylique comprend un mélange de méthacrylate de méthyle (MMA) et de polyméthacrylate de méthyle (PMMA) dans un pourcentage en poids d'environ 35 - 38% par rapport au MMA.

7. Matière composite autonettoyante selon l'une quelconque des revendications précédentes, **caractérisée en ce que** lesdits monomères de réticulation comprennent du diméthacrylate d'éthylène glycol (EGDM), du tétraéthylèneglycol de méthacrylate (TEGDM) et du triméthylolpropane trifonctionnel (TMPTMA).

8. Matière composite autonettoyante selon l'une quelconque des revendications précédentes, **caractérisée en ce que** lesdites particules fines de la famille des silicates comprennent de la wollastonite, du silicate de calcium, de la cristobalite.

9. Processus pour la composition d'une matière composite autonettoyante comprenant les phases suivantes :

   - Mélange d'un monomère et d'un polymère aux fins d'obtenir un sirop méthacrylique, en quantité de 10 - 25% en poids du produit final ;
   - Dispersion de dioxyde de titane ($TiO_2$) photocatalytique dans le sirop méthacrylique dans un pourcentage en poids de 0,05 - 5% par rapport au poids du sirop méthacrylique ;
   - Agitation du mélange de sirop méthacrylique et dioxyde de titane ($TiO_2$) photocatalytique ;
   - Ajout dans le mélange des composants suivants : 65 - 80% en poids de charges minérales à base de quartz ; 2 - 15% en poids de particules fines de la famille des silicates ayant des dimensions inférieures à 0,1 mm ; 5 - 20% de microsphères de verre ayant une granulométrie inférieure à 212 microns; agent de pontage d'ancrage entre le $TiO_2$ photocatalytique et le sirop méthacrylique ; et des monomères de réticulation pour obtenir la réticulation du sirop méthacrylique ; où ledit agent de pontage d'ancrage du $TiO_2$ est le silane ;
   - Agitation du mélange final ;
   - Polymérisation du mélange dans un moule.

10. Processus selon la revendication 9, **caractérisé en ce que** ledit silane est ajouté dans une quantité double par rapport au $TiO_2$ photocatalytique.

**11.** Processus selon la revendication 9 ou 10, **caractérisé en ce que** lesdites phases d'agitation du mélange de sirop méthacrylique et de dioxyde de titane (TiO$_2$) photocatalytique sont effectuées avec un agitateur à hélice à une vitesse comprise entre 900 tr/min - 1800 tr/min pour une durée de 3 heures avant d'ajouter les autres composants.

**12.** Processus selon l'une quelconque des revendications de 9 à 11, caractérisé en ce ladite phase de polymérisation dans le moule est effectuée avec une température de départ de 50 °C progressivement croissante jusqu'à 110 °C pour une durée de 40 minutes.

**FIG. 1**

FIG. 2

**FIG. 3**

**FIG. 4**

H2O contact angle on surface with
TiO2 0.05% and SiO2 0.0075%

$y = 75{,}227e^{-0{,}005x}$
$R^2 = 0{,}9348$

FIG. 5

CH2I2 contact angle on surface with
TiO2 0.05% and SiO2 0.0075%

$y = 59{,}058e^{-0{,}083x}$
$R^2 = 0{,}9494$

FIG. 6

FIG. 7A

FIG. 7B

FIG. 8A

FIG. 8B

FIG. 9 A.

FIG. 9B

FIG. 10

**FIG. 11**

EOSIN decoloration at Xenon lamp

**FIG. 12 A**

**FIG. 12 B**

METHYLENE BLUE decoloration at Xenon lamp

**FIG. 13 A**

**FIG. 13 B.**

EOSIN dΔe/DT at Xenon lamp

FIG. 14

METHYLENE BLUE dΔe/DT at Xenon lamp

FIG. 15.

**FIG. 16**

**FIG. 17.**

Oleic acid degradation

**FIG. 18**

Methyl red degradation

**FIG. 19 A**

**FIG. 19 B**

**FIG. 20**

**FIG. 21**

Eosin Y and methylene blue degradation in oat DQ at 03% in TiO2

**FIG. 22**

**FIG. 23**

**FIG. 24**

**FIG. 25**

FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1114716 A

- WO 0238682 A